(19) Europäisches Patentamt
European Patent Office
Office européen des brevets

(11) EP 4 302 602 A1

(12) EUROPEAN PATENT APPLICATION
published in accordance with Art. 153(4) EPC

(43) Date of publication:
**10.01.2024 Bulletin 2024/02**

(21) Application number: **22763202.3**

(22) Date of filing: **28.02.2022**

(51) International Patent Classification (IPC):
***A01N 43/90*** *(2006.01)* ***A01P 5/00*** *(2006.01)*
***A01P 7/00*** *(2006.01)*

(52) Cooperative Patent Classification (CPC):
**A01N 43/90; A01P 5/00; A01P 7/00**

(86) International application number:
**PCT/JP2022/008337**

(87) International publication number:
**WO 2022/186146 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.03.2021 JP 2021031870**

(71) Applicant: **Sumitomo Chemical Company Limited Tokyo 103-6020 (JP)**

(72) Inventors:
- **UEMURA, Daisuke deceased (JP)**
- **IWATA, Chiemi Takarazuka-shi Hyogo 6658555 (JP)**
- **SUZUKI, Tatsuya Takarazuka-shi Hyogo 6658555 (JP)**

(74) Representative: **Vossius & Partner Patentanwälte Rechtsanwälte mbB Siebertstraße 3 81675 München (DE)**

(54) **METHOD FOR CONTROLLING HARMFUL ARTHROPODS OR HARMFUL NEMATODES USING ZOANTHAMINE**

(57) The present invention provides a method for controlling a harmful arthropod or a harmful nematode. A compound represented by formula (I)

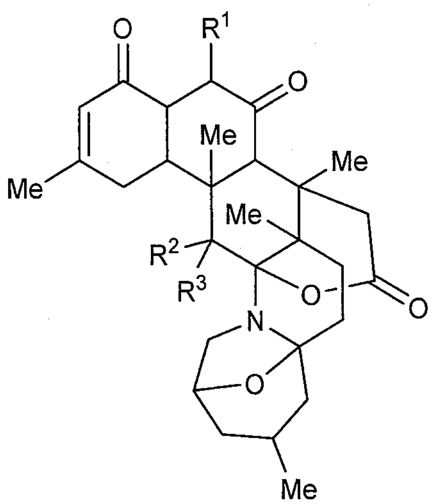

(I)

[wherein: $R^1$ represents a hydrogen atom or a methyl group; and $R^2$ and $R^3$ each represent a hydrogen atom, or $R^2$ and $R^3$ are combined with each other to represent an oxo group] or an N-oxide thereof or a salt thereof can be used for controlling a harmful arthropod or a harmful nematode.

EP 4 302 602 A1

## Description

TECHNICAL FIELD

This patent application claims the priority to and the benefit under the Paris convention of Japanese Patent Application No. 2021-031870 filed on March 1, 2021, the entire contents of which are incorporated herein by reference.
The present invention relates to methods for controlling harmful arthropods or harmful nematodes using zoanthamines.

BACKGROUND ART

To date, various compounds have been studied in order to control harmful arthropods or harmful nematodes (for example, see Nonpatent Document 1).
Meanwhile, Nonpatent Document 2 discloses that norzoanthamine inhibits the growth of P388 mouse leukemia cells. Nonpatent Document 3 discloses that zoanthamines and salts thereof suppress the IL-6 production by osteoblasts, and suppress the decrease of bone mass and bone strength caused by osteoporosis.

CITATION LIST

NONPATENT DOCUMENT

Nonpatent Document 1: The Pesticide Manual - 17th edition (published by BCPC); ISBN 978-1-901396-88-1
Nonpatent Document 2: Heterocyclic Communications, 1995, 1(2-3), 207-214.
Nonpatent Document 3: Bulletin of the Chemical Society of Japan, 1998, 71, 771-779.

SUMMARY OF THE INVENTION

PROBLEMS TO BE SOLVED BY INVENTION

An object of the present invention is to provide methods for controlling harmful arthropods or harmful nematodes.

MEANS TO SOLVE PROBLEMS

The present invention provides the followings.

[1] A method for controlling a harmful arthropod or a harmful nematode which comprises applying an effective amount of a compound represented by formula (I)

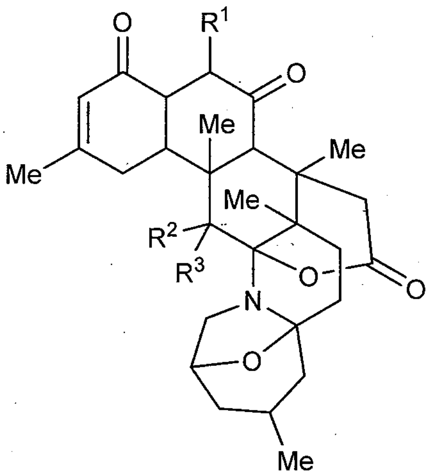

(I)

[wherein:

$R^1$ represents a hydrogen atom or a methyl group; and
$R^2$ and $R^3$ each represent a hydrogen atom, or $R^2$ and $R^3$ are combined with each other to represent an oxo group] or an N-oxide thereof or a salt thereof (hereinafter the compound represented by formula (I), or an N-oxide thereof or a salt thereof is referred to as "Present compound" or "compound of the present invention") to a harmful arthropod or a harmful nematode or a habitat where a harmful arthropod or a harmful nematode lives.

[2] The method according to [1], wherein $R^2$ and $R^3$ each represent a hydrogen atom in the formula (I).
[3] A composition for controlling a harmful arthropod or a harmful nematode comprising a compound represented by formula (I)

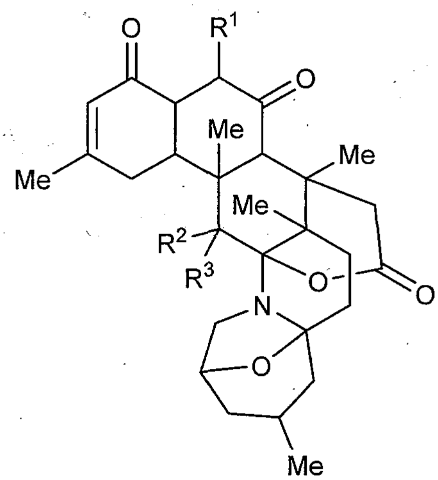

(I)

[wherein:

$R^1$ represents a hydrogen atom or a methyl group; and
$R^2$ and $R^3$ each represent a hydrogen atom, or $R^2$ and $R^3$ are combined with each other to represent an oxo group] or an N-oxide thereof or a salt thereof.

[4] The composition according to [3] further comprising one or more ingredient(s) selected from the group consisting of Group (a), Group (b), Group (c), Group (d), and Group (e):

Group (a): a group consisting of insecticidal active ingredients, miticidal active ingredients, and nematicidal active ingredients;
Group (b): fungicidal active ingredients;
Group (c): plant growth regulatory ingredients;
Group (d): repellent ingredients;
Group (e): biological control materials.

[5] A method for controlling a harmful arthropod or a harmful nematode which comprises applying an effective amount of the composition according to [4] to a harmful arthropod or a harmful nematode or a habitat where a harmful arthropod or a harmful nematode lives.
[6] A seed or a vegetative reproductive organ holding an effective amount of a compound represented by formula (I)

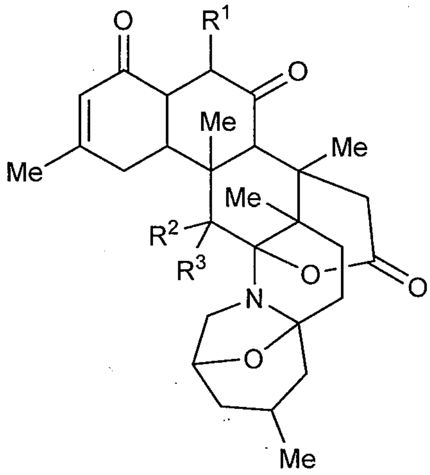

( I )

[wherein:

$R^1$ represents a hydrogen atom or a methyl group; and
$R^2$ and $R^3$ each represent a hydrogen atom, or $R^2$ and $R^3$ are combined with each other to represent an oxo group] or an N-oxide thereof or a salt thereof or an effective amount of the composition according to [4].

[7] A composition for controlling a harmful arthropod or a harmful nematode comprising a.compound represented by formula (I)

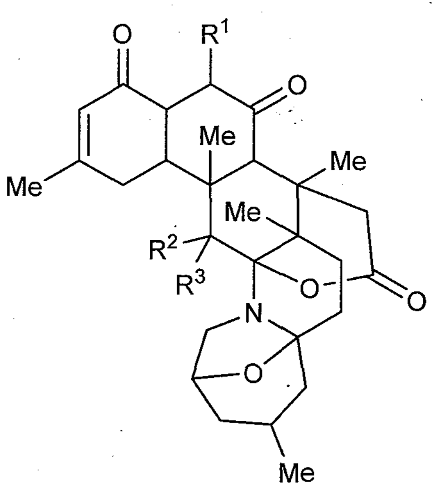

( I )

[wherein:

$R^1$ represents a hydrogen atom or a methyl group; and
$R^2$ and $R^3$ each represent a hydrogen atom, or $R^2$ and $R^3$ are combined with each other to represent an oxo group] or an N-oxide thereof or a salt thereof, and an inert carrier.

EFFECT OF INVENTION

According to the present invention, harmful arthropods or harmful nematodes can be controlled.

MODE FOR CARRYING OUT THE INVENTION

In the present description, Me represents a methyl group.
The Present compound has stereoisomers. The Present compound encompasses each stereoisomer and

mixtures of stereoisomers at any ratio.

The salt of the compound represented by formula (I) refers to an acid addition salt. Examples of the acid to form the acid addition salt include inorganic acids such as hydrogen chloride, phosphoric acid, and sulfuric acid; and organic acids such as acetic acid, trifluoroacetic acid, benzoic acid, and p-toluenesulfonic acid. Examples of the salt of the compound represented by formula (I) include the compounds represented by the following formulae.

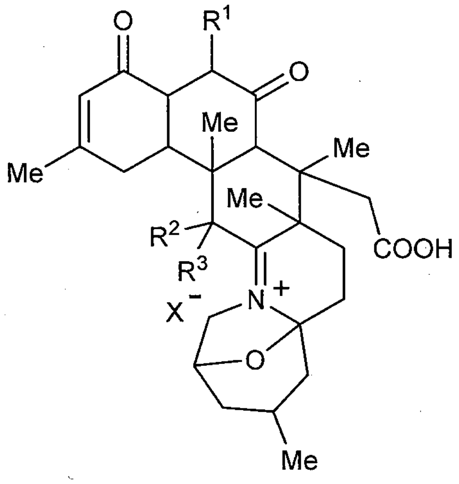

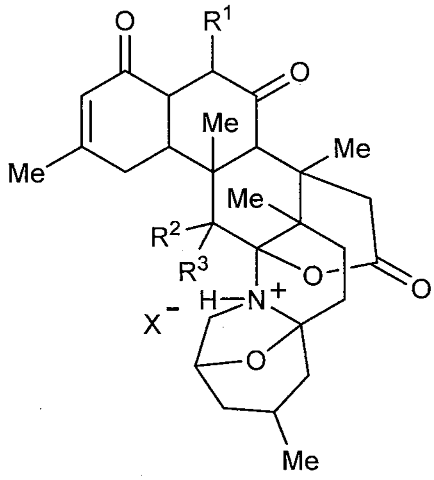

[wherein $X^-$ represents an anion obtained by losing a proton from an acid, and the other symbols are the same as defined above.]

Aspects of the Present compound include the following compounds.

[Aspect 1] The compound represented by formula (I) or a salt thereof.
[Aspect 2] The Present compound, wherein $R^2$ and $R^3$ each represent a hydrogen atom.
[Aspect 3] The compound represented by formula (I), wherein $R^2$ and $R^3$ each represent a hydrogen atom or a salt thereof.
[Aspect 4] A compound represented by formula (II)

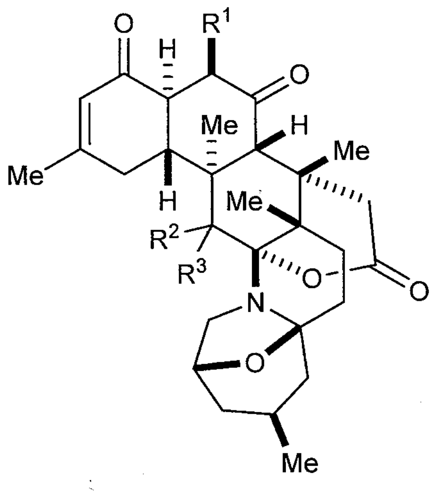

( II )

[wherein the symbols are the same as defined above.]
or an N-oxide thereof or a salt thereof.
[Aspect 5] The compound represented by formula (II) or a salt thereof.
[Aspect 6] The compound according to the Aspect 4, wherein $R^2$ and $R^3$ each represent a hydrogen atom.
[Aspect 7] The compound represented by formula (II), wherein $R^2$ and $R^3$ each represent a hydrogen atom or a salt thereof.

Examples of the Present compound include the following compounds.

The compound represented by formula (II), wherein $R^1$, $R^2$, and $R^3$ each represent a hydrogen atom (hereinafter referred to as "Present compound 1 or norzoanthamine").

The compound represented by formula (II), wherein $R^1$ represents a methyl group; and $R^2$ and $R^3$ each represent a hydrogen atom (hereinafter referred to as "Present compound 2 or zoanthamine").

The compound represented by formula (II), wherein $R^1$ represents a hydrogen atom; and $R^2$ and $R^3$ are combined with each other to represent an oxo group (hereinafter referred to as "Present compound 3 or norzoanthaminone").

The compound represented by formula (II), wherein $R^1$ represents a methyl group; and $R^2$ and $R^3$ are combined with each other to represent an oxo group (hereinafter referred to as "Present compound 4 or zoanthaminone").

Hydrochloride of the Present compound 1 (hereinafter referred to as "Present compound 5").

Hydrochloride of the Present compound 2 (hereinafter referred to as "Present compound 6").

Hydrochloride of the Present compound 3 (hereinafter referred to as "Present compound 7").

Hydrochloride of the Present compound 4 (hereinafter referred to as "Present compound 8").

Acetate of the Present compound 1 (hereinafter referred to as "Present compound 9").

Acetate of the Present compound 2 (hereinafter referred to as "Present compound 10").

Acetate of the Present compound 3 (hereinafter referred to as "Present compound 11").

Acetate of the Present compound 4 (hereinafter referred to as "Present compound 12").

Sulfate of the Present compound 1 (hereinafter referred to as "Present compound 13").

Sulfate of the Present compound 2 (hereinafter referred to as "Present compound 14").

Sulfate of the Present compound 3 (hereinafter referred to as "Present compound 15").

Sulfate of the Present compound 4 (hereinafter referred to as "Present compound 16").

N-oxide of the Present compound 1 (hereinafter referred to as "Present compound 17").

N-oxide of the Present compound 2 (hereinafter referred to as "Present compound 18").

N-oxide of the Present compound 3 (hereinafter referred to as "Present compound 19").

N-oxide of the Present compound 4 (hereinafter referred to as "Present compound 20").

The compound represented by formula (I), wherein $R^1$, $R^2$, and $R^3$ each represent a hydrogen atom (hereinafter referred to as "Present compound 21").

The compound represented by formula (I), wherein $R^1$ represents a methyl group; and $R^2$ and $R^3$ each represent a hydrogen atom (hereinafter referred to as "Present compound 22").

The compound represented by formula (I), wherein $R^1$ represents a hydrogen atom; and $R^2$ and $R^3$ are combined with each other to represent an oxo group (hereinafter referred to as "Present compound 23").

The compound represented by formula (I), wherein $R^1$ represents a methyl group; and $R^2$ and $R^3$ are combined with each other to represent an oxo group (hereinafter referred to as "Present compound 24").

Hydrochloride of the Present compound 21 (hereinafter referred to as "Present compound 25").

Hydrochloride of the Present compound 22 (hereinafter referred to as "Present compound 26").

Hydrochloride of the Present compound 23 (hereinafter referred to as "Present compound 27").

Hydrochloride of the Present compound 24 (hereinafter referred to as "Present compound 28").

Acetate of the Present compound 21 (hereinafter referred to as "Present compound 29").

Acetate of the Present compound 22 (hereinafter referred to as "Present compound 30").

Acetate of the Present compound 23 (hereinafter referred to as "Present compound 31").

Acetate of the Present compound 24 (hereinafter referred to as "Present compound 32").

Sulfate of the Present compound 21 (hereinafter referred to as "Present compound 33").

Sulfate of the Present compound 22 (hereinafter referred to as "Present compound 34").

Sulfate of the Present compound 23 (hereinafter referred to as "Present compound 35").

Sulfate of the Present compound 24 (hereinafter referred to as "Present compound 36").

N-oxide of the Present compound 21 (hereinafter referred to as "Present compound 37").

N-oxide of the Present compound 22 (hereinafter referred to as "Present compound 38").

N-oxide of the Present compound 23 (hereinafter referred to as "Present compound 39").

N-oxide of the Present compound 24 (hereinafter referred to as "Present compound 40").

Next, production methods for the Present compounds are described.

Production method 1

A compound represented by formula (IV) (hereinafter referred to as "Compound (IV)") may be prepared by reacting a compound represented by formula (III) (hereinafter referred to as "Compound (III)") with an oxidizing agent.

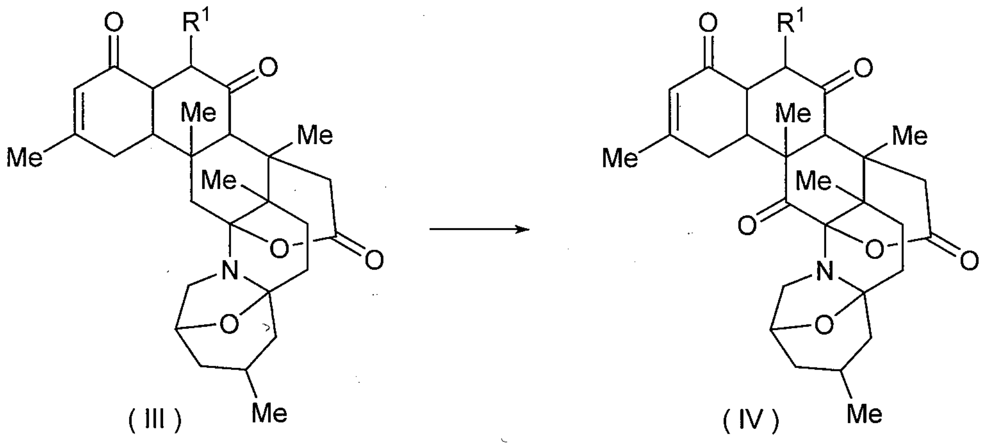

[wherein the symbols are the same as defined above.]

The reaction is usually carried out in a solvent. Examples of the solvent include halogenated hydrocarbons such as dichloromethane and chloroform; nitriles such as acetonitrile; alcohols such as methanol and ethanol; acetic acid; water; and mixtures of two or more of them.

Examples of the oxidizing agent include m-chloroperbenzoic acid.

In the reaction, the oxidizing agent is usually used at a ratio of 1 to 3 mol relative to 1 mol of the Compound (III) .

The reaction temperature is usually within the range of -10 to 50°C. The reaction time is usually within the range of 0.1 to 12 hour(s).

When the reaction is completed, to the reaction mixture is added water, the resulting mixture is subjected to extraction with organic solvent(s), and the resulting organic layer is washed with an aqueous solution of a reducing agent (for example, sodium sulfite or sodium thiosulfate) and an aqueous solution of a base (for example, sodium hydrogen carbonate) as needed. The resulting organic layer is dried and/or concentrated to give the Compound (IV).

The Compound (III) may be prepared according to, for example, the methods described in JPH10-53589A and Pure and Applied Chemistry, 2007, 79, 651-665. Further, norzoanthamine, zoanthamine, norzoanthaminone, and zoanthaminone may also be prepared according to, for example, the methods described in JPH10-53589A and Heterocyclic Communications, 1995, 1(2-3), 207-214.

Production method 2

Salts of the Present compound may be prepared according to, for example, the methods described in JPH10-53589A, Bulletin of the Chemical Society of Japan, 1998, 71, 771., Chemistry - An Asian Journal, 2011, 6, 922-931., and Pure and Applied Chemistry, 2007, 79, 651-665.

The Present compound may be mixed with or used in combination with one or more ingredient(s) selected from the group consisting of the following Group (a), Group (b), Group (c), Group (d), and Group (e) (hereinafter referred to as "Present ingredient").

When the Present compound is mixed with or used in combination with the Present ingredient, they are used simultaneously, separately, or at time intervals with each other.

When the Present compound is used simultaneously with the Present ingredient, the Present compound and the Present ingredient may be contained in separate formulations or contained in one formulation.

One aspect of the present invention provides a composition comprising one or more ingredient(s) selected from the group consisting of Group (a), Group (b), Group (c), Group (d), and Group (e), and the Present compound (hereinafter referred to as "Composition A").

Group (a) is a group consisting of acetylcholinesterase inhibitors (for example, carbamate insecticides and organophosphate insecticides), GABA-gated chloride channel blockers (for example, phenylpyrazole insecticides), sodium channel modulators (for example, pyrethroid insecticides), nicotinic acetylcholine receptor competitive modulators (for example, neonicotinoid insecticides), nicotinic acetylcholine receptor allosteric modulators, glutamate-gated chloride channel allosteric modulators (for example, macrolide insecticides), juvenile hormone mimics, multisite inhibitors, chordotonal organ TRPV channel modulators, mite growth inhibitors, microbial disruptors of insect midgut membranes, inhibitors of mitochondrial ATP synthase, uncouplers of oxidative phosphorylation, nicotinic acetylcholine receptor channel blockers (for example, nereistoxin insecticides), inhibitors of chitin biosynthesis, moulting disruptors, ecdysone receptor agonists, octopamine receptor agonists, mitochondrial complexes I, II, III, and IV electron transport inhibitors, voltage-dependent sodium channel blockers, inhibitors of acetyl CoA carboxylase, ryanodine receptor modulators (for

example, diamide insecticides), and chordotonal organ modulators, and other insecticidal active ingredients, miticidal active ingredients, and nematicidal active ingredients. These ingredients are described in the classification on the basis of action mechanism by IRAC.

Group (b) is a group consisting of nucleic acids synthesis inhibitors (for example, phenylamide fungicides and acylamino acid fungicides), cell division and cytoskeleton inhibitors (for example, MBC fungicides), respiration inhibitors (for example, QoI fungicides and QiI fungicides), amino acids synthesis and protein synthesis inhibitors (for example, anilino-pyrimidine fungicides), signal transduction inhibitors, lipid synthesis and membrane synthesis inhibitors, sterol biosynthesis inhibitors (for example, DMI fungicides such as triazole fungicides), cell wall biosynthesis inhibitors, melanin synthesis inhibitors, plant defense inducers, and fungicides with multi-site contact activity, and other fungicidal active ingredients. These ingredients are described in the classification on the basis of action mechanism by FRAC.

Group (c) is a group of plant growth regulatory ingredients.

Group (d) is a group of repellent ingredients.

Group (e) is a group of biological control materials consisting of bacteria, fungi, yeasts, protists, viruses, products produced by organisms, plants, and plant extracts.

Hereinafter, examples of the combination of the Present ingredient and the Present compound are described. For example, "alanycarb + SX" indicates a combination of alanycarb and SX.

The abbreviation of "SX" indicates any one of the Present compounds selected from the Present compound 1 to the Present compound 40. Also, all of the following Present ingredients are known ingredients, and may be obtained from commercially available formulations, or may be prepared by known methods. When the Present ingredient is a microorganism, it may also be available from a bacterial authority depository. Further, the number in parentheses represents the CAS RN (registered trademark).

Combinations of the Present ingredient in the above Group (a) and the Present compound:

abamectin + SX, acephate + SX, acequinocyl + SX, acetamiprid + SX, acetoprole + SX, acrinathrin + SX, acynonapyr + SX, afidopyropen + SX, afoxolaner + SX, alanycarb + SX, aldicarb + SX, allethrin + SX, alpha-cypermethrin + SX, alpha-endosulfan + SX, aluminium phosphide + SX, amitraz + SX, azadirachtin + SX, azamethiphos + SX, azinphos-ethyl + SX, azinphos-methyl + SX, azocyclotin + SX, bendiocarb + SX, benfluthrin + SX, benfuracarb + SX, bensultap + SX, benzoximate + SX, benzpyrimoxan + SX, beta-cyfluthrin + SX, beta-cypermethrin + SX, bifenazate + SX, bifenthrin + SX, bioallethrin + SX, bioresmethrin + SX, bistrifluron + SX, borax + SX, boric acid + SX, broflanilide + SX, bromopropylate + SX, buprofezin + SX, butocarboxim + SX, butoxycarboxim + SX, cadusafos + SX, calcium phosphide + SX, carbaryl + SX, carbofuran + SX, carbosulfan + SX, cartap hydrochloride + SX, cartap + SX, chinomethionat + SX, chlorantraniliprole + SX, chlordane + SX, chlorethoxyfos + SX, chlorfenapyr + SX, chlorfenvinphos + SX, chlorfluazuron + SX, chlormephos + SX, chloropicrin + SX, chlorpyrifos + SX, chlorpyrifos-methyl + SX, chromafenozide + SX, clofentezine + SX, clothianidin + SX, coumaphos + SX, cryolite + SX, cyanophos + SX, cyantraniliprole + SX, cyclaniliprole + SX, cyclobutrifluram + SX, cycloprothrin + SX, cycloxaprid + SX, cyenopyrafen + SX, cyetpyrafen + SX, cyflumetofen + SX, cyfluthrin + SX, cyhalodiamide + SX, cyhalothrin + SX, cyhexatin + SX, cypermethrin + SX, cyphenothrin + SX, cyproflanilide + SX, cyromazine + SX, dazomet + SX, deltamethrin + SX, demeton-S-methyl + SX, diafenthiuron + SX, diazinon + SX, dichlorvos + SX, dicloromezotiaz + SX, dicofol + SX, dicrotophos + SX, diflovidazin + SX, diflubenzuron + SX, dimefluthrin + SX, dimethoate + SX, dimethylvinphos + SX, dimpropyridaz + SX, dinotefuran + SX, disodium octaborate + SX, disulfoton + SX, DNOC (2-methyl-4,6-dinitrophenol) + SX, doramectin + SX, emamectin-benzoate + SX, empenthrin + SX, endosulfan + SX, EPN (O-ethyl O-(4-nitrophenyl) phenylphosphonothioate) + SX, epsilon-metofluthrin + SX, epsilon-momfluorothrin + SX, esfenvalerate + SX, ethiofencarb + SX, ethion + SX, ethiprole + SX, ethoprophos + SX, etofenprox + SX, etoxazole + SX, famphur + SX, fenamiphos + SX, fenazaquin + SX, fenbutatin oxide + SX, fenitrothion + SX, fenmezoditiaz + SX, fenobucarb + SX, fenoxycarb + SX, fenpropathrin + SX, fenpyroximate + SX, fenthion + SX, fenvalerate + SX, fipronil + SX, flometoquin + SX, flonicamid + SX, fluacrypyrim + SX, fluazaindolizine + SX, fluazuron + SX, flubendiamide + SX, fluchlordiniliprole + SX, flucycloxuron + SX, flucythrinate + SX, fluensulfone + SX, flufenoprox + SX, flufenoxuron + SX, flufiprole + SX, flumethrin + SX, flupentiofenox + SX, flupyradifurone + SX, flupyrimin + SX, fluralaner + SX, fluvalinate + SX, fluxametamide + SX, formetanate + SX, fosthiazate + SX, furamethrin + SX, furathiocarb + SX, gamma-cyhalothrin + SX, GS-omega/kappa HXTX-Hv1a peptide + SX, halfenprox + SX, halofenozide + SX, heptafluthrin + SX, heptenophos + SX, hexaflumuron + SX, hexythiazox + SX, potassium salt of hop beta acid + SX, hydramethylnon + SX, hydroprene + SX, imicyafos + SX, imidacloprid + SX, imidaclothiz + SX, imiprothrin + SX, indazapyroxamet + SX, indoxacarb + SX, isocycloseram + SX, isofenphos + SX, isoprocarb + SX, isopropyl-O-(methoxyaminothiophosphoryl) salicylate + SX, isoxathion + SX, ivermectin + SX, kadethrin + SX, kappa-tefluthrin + SX, kappa-bifenthrin + SX, kinoprene + SX, lambda-cyhalothrin + SX, lenoremycin + SX, lepimectin + SX, lime sulfur + SX, lotilaner + SX, lufenuron + SX, machine oil + SX, malathion + SX, mecarbam + SX, meperfluthrin + SX, metaflumizone + SX, metam + SX, methamidophos + SX, methidathion + SX, methiocarb + SX, methomyl + SX, methoprene + SX, methoxychlor + SX, methoxyfenozide + SX, methyl bromide + SX, metofluthrin + SX, metolcarb + SX, metoxadiazone + SX, mevinphos + SX, milbemectin + SX, milbemycin oxime + SX, momfluorothrin + SX, monocrotophos + SX, moxidectin + SX, naled + SX, nicofluprole + SX, nicotine + SX, nicotine-sulfate + SX, nitenpyram + SX, novaluron + SX, noviflumuron

+ SX, omethoate + SX, oxamyl + SX, oxazosulfyl + SX, oxydemeton-methyl + SX, parathion + SX, parathion-methyl + SX, permethrin + SX, phenothrin + SX, phenthoate + SX, phorate + SX, phosalone + SX, phosmet + SX, phosphamidon + SX, phosphine + SX, phoxim + SX, pirimicarb + SX, pirimiphos-methyl + SX, prallethrin + SX, profenofos + SX, profluthrin + SX, propargite + SX, propetamphos + SX, propoxur + SX, propylene glycol alginate + SX, prothiofos + SX, pyflubumide + SX, pymetrozine + SX, pyraclofos + SX, pyrethrins + SX, pyridaben + SX, pyridalyl + SX, pyridaphenthion + SX, pyrifluquinazone + SX, pyrimidifen + SX, pyriminostrobin + SX, pyriprole + SX, pyriproxyfen + SX, quinalphos + SX, resmethrin + SX, rotenone + SX, sarolaner + SX, selamectin + SX, sigma-cypermethrin + SX, silafluofen + SX, sodium borate + SX, sodium metaborate + . SX, spidoxamat + SX, spinetoram + SX, spinosad + SX, spirodiclofen + SX, spiromesifen + SX, spiropidion + SX, spirotetramat + SX, sulfluramid + SX, sulfotep + SX, sulfoxaflor + SX, sulfur + SX, sulfuryl fluoride + SX, tartar emetic + SX, tau-fluvalinate + SX, tebufenozide + SX, tebufenpyrad + SX, tebupirimfos + SX, teflubenzuron + SX, tefluthrin + SX, temephos + SX, terbufos + SX, tetrachlorantraniliprole + SX, tetrachlorvinphos + SX, tetradifon + SX, tetramethrin + SX, tetramethylfluthrin + SX, tetraniliprole +.SX, theta-cypermethrin + SX, thiacloprid + SX, thiamethoxam + SX, thiocyclam + SX, thiodicarb + SX, thiofanox + SX, thiometon + SX, thiosultap-disodium + SX, thiosultap-monosodium + SX, tioxazafen + SX, tolfenpyrad + SX, tralomethrin + SX, trans.fluthrin + SX, triazamate + SX, triazophos + SX, trichlorfon + SX, trifluenfuronate + SX, triflumezopyrim + SX, triflumuron + SX, trimethacarb + SX, tyclopyrazoflor + SX, vamidothion + SX, XMC (3,5-dimethylphenyl N-methylcarbamate) + SX, xylylcarb + SX, zeta-cypermethrin + SX, zinc phosphide + SX, 4-[5-(3,5-dichlorophenyl)-5-(trifluoromethyl)-4,5-dihydro-1,2-oxazol-3-yl]-2-methyl-N-(1-oxothietan-3-yl)benzamide (1241050-20-3) + SX, 3-methoxy-N-(5-{5-(trifluoromethyl)-5-[3-(trifluoromethyl)phenyl]-4,5-dihydro-1,2-oxazol-3-yl}indan-1-yl)propanamide (1118626-57-5) + SX, 2-({2-fluoro-4-methyl-5-[(2,2,2-trifluoroethyl)sulfinyl]phenyl}imino)-3-(2,2,2-trifluoroethyl)-1,3-thiazolidin-4-one. (1445683-71-5) + SX, (2Z)-2-({2-fluoro-4-methyl-5-[(R)-(2,2,2-trifluoroethyl)sulfinyl]phenyl}imino)-3-(2,2,2-trifluoroethyl)-1,3-thiazolidin-4-one (2377084-09-6) + SX, N-{4-chloro-3-[(1-cyanocyclopropyl)carbamoyl]phenyl}-1-methyl-4-(methanesulfonyl)-3-(1,1,2,2,2-pentafluoroethyl)-1H-pyrazole-3-carboxamide (1400768-21-9) + SX, 3-(4'-fluoro-2,4-dimethyl[1,1'-biphenyl]-3-yl)-4-hydroxy-8-oxa-1-azaspiro[4.5]dec-3-en-2-one (1031385-91-7) + SX, N-[3-chloro-1-(pyridin-3-yl)-1H-pyrazol-4-yl]-2-(methanesulfonyl)propanamide (2396747-83-2) + SX, 1,4-dimethyl-2-[2-(3-pyridinyl)-2H-indazol-5-yl]-1,2,4-triazolidine-3,5-dione (2171099-09-3) + SX, 2-isopropyl-5-[(3,4,4-trifluoro-3-buten-1-yl)sulfonyl]-1,3,4-thiadiazole (2058052-95-0) + SX, N-({2-fluoro-4-[(2S,3S)-2-hydroxy-3-(3,4,5-trichlorophenyl)-3-(trifluoromethyl)pyrrolidin-1-yl]phenyl}methyl)cyclopropanecarboxamide + SX, 7-fluoro-N-[1-(methylsulfanyl)-2-methylpropan-2-yl]-2-(pyridin-3-yl)-2H-indazole-4-carboxamide + SX, 7-fluoro-N-[1-(methanesulfinyl)-2-methylpropan-2-yl]-2-(pyridin-3-yl)-2H-indazole-4-carboxamide + SX, 7-fluoro-N-[1-(methanesulfonyl)-2-methylpropan-2-yl]-2-(pyridin-3-yl)-2H-indazole-4-carboxamide + SX, N-[1-(difluoromethyl)cyclopropyl]-2-(pyridin-3-yl)-2H-indazole-4-carboxamide + SX, 2,9-dihydro-9-(methoxymethyl)-2-(pyridin-3-yl)-10H-pyrazolo[3,4-f]pyrido[2,3-b][1,4]oxazepin-10-one (2607927-97-7) + SX.

Combinations of the Present ingredient in the above Group (b) and the Present compound:

acibenzolar-S-methyl + SX, aldimorph + SX, ametoctradin + SX, aminopyrifen + SX, amisulbrom + SX, anilazine + SX, azaconazole + SX, azoxystrobin + SX, basic copper sulfate + SX, benalaxyl + SX, benalaxyl-M + SX, benodanil + SX, benomyl + SX, benthiavalicarb + SX, benthiavalicarb-isopropyl + SX, benzovindiflupyr + SX, binapacryl + SX, biphenyl + SX, bitertanol + SX, bixafen + SX, blasticidin-S + SX, Bordeaux mixture + SX, boscalid + SX, bromothalonil + SX, bromuconazole + SX, bupirimate + SX, captafol + SX, captan + SX, carbendazim + SX, carboxin + SX, carpropamid + SX, chinomethionat + SX, chloroinconazide + SX, chloroneb + SX, chlorothalonil + SX, chlozolinate + SX, copper(II) acetate + SX, copper(II) hydroxide + SX, copper oxychloride + SX, copper(II) sulfate + SX, coumoxystrobin + SX, cyazofamid + SX, cyflufenamid + SX, cymoxanil + SX, cyproconazole + SX, cyprodinil + SX, dichlobentiazox + SX, dichlofluanid + SX, diclocymet + SX, diclomezine + SX, dicloran + SX, diethofencarb + SX, difenoconazole + SX, diflumetorim + SX, dimethachlone + SX, dimethirimol + SX, dimethomorph + SX, dimoxystrobin + SX, diniconazole + SX, diniconazole-M + SX, dinocap + SX, dipotassium hydrogenphosphite + SX, dipymetitrone + SX, dithianon + SX, dodecylbenzenesulphonic acid bisethylenediamine copper(II) salt + SX, dodemorph + SX, dodine + SX, edifenphos + SX, enoxastrobin + SX, epoxiconazole + SX, etaconazole + SX, ethaboxam + SX, ethirimol + SX, etridiazole + SX, famoxadone + SX, fenamidone + SX, fenaminstrobin + SX, fenarimol + SX, fenbuconazole + SX, fenfuram + SX, fenhexamid + SX, fenoxanil + SX, fenpiclonil + SX, fenpicoxamid + SX, fenpropidin + SX, fenpropimorph + SX, fenpyrazamine + SX, fentin acetate + SX, fentin chloride + SX, fentin hydroxide + SX, ferbam + SX, ferimzone + SX, florylpicoxamid + SX, fluazinam + SX, flubeneteram + SX, fludioxonil + SX, flufenoxadiazam + SX, flufenoxystrobin + SX, fluindapyr + SX, flumetylsulforim + SX, flumorph + SX, fluopicolide + SX, fluopyram + SX, fluopimomide + SX, fluoroimide + SX, fluoxapiprolin + SX, fluoxastrobin + SX, fluoxytioconazole + SX, fluquinconazole + SX, flusilazole + SX, flusulfamide + SX, flutianil + SX, flutolanil + SX, flutriafol + SX, fluxapyroxad + SX, folpet + SX, fosetyl + SX, fosetyl-aluminium + SX, fuberidazole + SX, furalaxyl + SX, furametpyr + SX, guazatine + SX, hexaconazole + SX, hymexazole + SX, imazalil + SX, imibenconazole + SX, iminoctadine + SX, iminoctadine triacetate + SX, inpyrfluxam + SX, iodocarb + SX, ipconazole + SX, ipfentrifluconazole + SX, ipflufenoquin + SX, iprobenfos + SX, iprodione + SX, iprovalicarb + SX, isofetamid + SX, isoflucypram + SX, isoprothiolane + SX, isopyrazam + SX, isotianil + SX, kasugamycin + SX, kresoxim-methyl + SX, laminarin + SX, mancozeb + SX, mandestrobin + SX, mandipropamid + SX, maneb + SX, mefentrifluconazole + SX,

mepanipyrim + SX, mepronil + SX, meptyldinocap + SX, metalaxyl + SX, metalaxyl-M + SX, metarylpicoxamid + SX, metconazole + SX, methasulfocarb + SX, metiram + SX, metominostrobin + SX, metrafenone + SX, metyltetraprole + SX, myclobutanil + SX, naftifine + SX, nuarimol + SX, octhilinone + SX, ofurace + SX, orysastrobin + SX, oxadixyl + SX, oxathiapiprolin + SX, oxine-copper + SX, oxolinic acid + SX, oxpoconazole + SX, oxpoconazole fumarate + SX, oxycarboxin + SX, oxytetracycline + SX, pefurazoate + SX, penconazole + SX, pencycuron + SX, penflufen + SX, penthiopyrad + SX, phenamacril + SX, phosphorous acid + SX, phthalide + SX, picarbutrazox + SX, picoxystrobin + SX, piperalin + SX, polyoxins + SX, potassium hydrogencarbonate + SX, potassium dihydrogenphosphite + SX, probenazole + SX, prochloraz + SX, procymidone + SX, propamidine + SX, propamocarb + SX, propiconazole + SX, propineb + SX, proquinazid + SX, prothiocarb + SX, prothioconazole + SX, pydiflumetofen + SX, pyraclostrobin + SX, pyrametostrobin + SX, pyraoxystrobin + SX, pyrapropoyne + SX, pyraziflumid + SX, pyrazophos + SX, pyribencarb + SX, pyributicarb + SX, pyridachlometyl + SX, pyrifenox + SX, pyrimethanil + SX, pyrimorph + SX, pyriofenone + SX, pyrisoxazole + SX, pyroquilon + SX, quinconazole + SX, quinofumelin + SX, quinoxyfen + SX, quintozene + SX, Saponins of Chenopodium quinoa + SX, seboctylamine + SX, sedaxane + SX, silthiofam + SX, simeconazole + SX, sodium hydrogencarbonate + SX, spiroxamine + SX, streptomycin + SX, sulfur + SX, tebuconazole + SX, tebufloquin + SX, teclofthalam + SX, tecnazene + SX, terbinafine + SX, tetraconazole + SX, thiabendazole + SX, thifluzamide + SX, thiophanate + SX, thiophanate-methyl + SX, thiram + SX, thymol + SX, tiadinil + SX, tolclofos-methyl + SX, tolfenpyrad + SX, tolprocarb + SX, tolylfluanid + SX, triadimefon + SX, triadimenol + SX, triazoxide + SX, triclopyricarb + SX, tricyclazole + SX, tridemorph + SX, trifloxystrobin + SX, triflumizole + SX, triforine + SX, triticonazole + SX, validamycin + SX, valifenalate + SX, vinclozolin + SX, zinc thiazole + SX, zineb + SX, ziram + SX, zoxamide + SX, N'-[4-({3-[(4-chlorophenyl)methyl]-1,2,4-thiadiazol-5-yl}oxy)-2,5-dimethylphenyl]-N-ethyl-N-methylmethanimidamide (1202781-91-6) + SX, N'-{4-[(4,5-dichlorothiazol-2-yl)oxy]-2,5-dimethylphenyl}-N-ethyl-N-methylmethanimidamide (929908-57-6) + SX, N'-(2,5-dimethyl-4-phenoxyphenyl)-N-ethyl-N-methylmethanimidamide (1052688-31-9) + SX, N'-[5-chloro-4-(2-fluorophenoxy)-2-methylphenyl]-N-ethyl-N-methylmethanimidamide (2055589-28-9) + SX, N'-[2-chloro-4-(2-fluorophenoxy)-5-methylphenyl]-N-ethyl-N-methylmethanimidamide (2055756-21-1) + SX, N'-(2-chloro-4-phenoxy-5-methylphenyl)-N-ethyl-N-methylmethanimidamide (2062599-39-5) + SX, N'-[4-(1-hydroxy-1-phenyl-2,2,2-trifluoroethyl)-2-methyl-5-methoxyphenyl]-N-isopropyl-N-methylmethanimidamide (2101814-55-3) + SX, N'-[5-bromo-6-(1-methyl-2-propoxyethoxy)-2-methylpyridin-3-yl]-N-ethyl-N-methylmethanimidamide (1817828-69-5) + SX, 4-(2-bromo-4-fluorophenyl)-N-(2-chloro-6-fluorophenyl)-1,3-dimethyl-1H-pyrazol-5-amine (1362477-26-6) + SX, 2-[6-(3-fluoro-4-methoxyphenyl)-5-methylpyridin-2-yl]quinazoline (1257056-97-5) + SX, ethyl (2Z)-3-amino-2-cyano-3-phenylacrylate (39491-78-6) + SX, N-[(2-chlorothiazol-5-yl)methyl]-N-ethyl-6-methoxy-3-nitropyridin-2-amine (1446247-98-8) + SX, 5-(4-chlorobenzyl)-2-(chloromethyl)-2-methyl-1-(1H-1,2,4-triazol-1-ylmethyl)cyclopentan-1-ol (1394057-11-4) + SX, (1R, 2S, 5S)-5-(4-chlorobenzyl)-2-(chloromethyl)-2-methyl-1-(1H-1,2,4-triazol-1-ylmethyl)cyclopentan-1-ol (1801930-06-2) + SX, (1S, 2R, 5R)-5-(4-chlorobenzyl)-2-(chloromethyl)-2-methyl-1-(1H-1,2,4-triazol-1-ylmethyl)cyclopentan-1-ol (1801930-07-3) + SX, 2-(chloromethyl)-5-(4-fluorobenzyl)-2-methyl-1-(1H-1,2,4-triazol-1-ylmethyl)cyclopentan-1-ol (1394057-13-6) + SX, (1R, 2S, 5S)-2-(chloromethyl)-5-(4-fluorobenzyl)-2-methyl-1-(1H-1,2,4-triazol-1-ylmethyl)cyclopentan-1-ol (1801930-08-4) + SX, (1S, 2R, 5R)-2-(chloromethyl)-5-(4-fluorobenzyl)-2-methyl-1-(1H-1,2,4-triazol-1-ylmethyl)cyclopentan-1-ol (1801930-09-5) + SX, methyl 3-[(4-chlorophenyl)methyl]-2-hydroxy-1-methyl-2-(1H-1,2,4-triazol-1-ylmethyl)cyclopentan-1-carboxylate (1791398-02-1) + SX, 1-(2,4-difluorophenyl)-2-(1H-1,2,4-triazol-1-yl)-1-[1-(4-bromo-2,6-difluorophenoxy)cyclopropyl]ethanol (2019215-86-0) + SX, 1-(2,4-difluorophenyl)-2-(1H-1,2,4-triazol-1-yl)-1-[1-(4-chloro-2,6-difluorophenoxy)cyclopropyl]ethanol (2019215-84-8) + SX, 1-[2-(1-chlorocyclopropyl)-3-(2-fluorophenyl)-2-hydroxypropyl]-1H-imidazole-5-carbonitrile (2018316-13-5) + SX, 1-[2-(1-chlorocyclopropyl)-3-(2,3-difluorophenyl)-2-hydroxypropyl]-1H-imidazole-5-carbonitrile (2018317-25-2) + SX, 2-[6-(4-bromophenoxy)-2-(trifluoromethyl)pyridin-3-yl]-1-(1H-1,2,4-triazol-1-yl)propan-2-ol (2082661-43-4) + SX, 2-[6-(4-chlorophenoxy)-2-(trifluoromethyl)pyridin-3-yl]-1-(1H-1,2,4-triazol-1-yl)propan-2-ol (2082660-27-1) + SX, methyl ({2-methyl-5-[1-(4-methoxy-2-methylphenyl)-1H-pyrazol-3-yl]phenyl}methyl)carbamate (1605879-98-8) + SX, 2-(difluoromethyl)-N-[1,1,3-trimethyl-2,3-dihydro-1H-inden-4-yl]pyridine-3-carboxamide (1616239-21-4) + SX, 2-(difluoromethyl)-N-[3-ethyl-1,1-dimethyl-2,3-dihydro-1H-inden-4-yl]pyridine-3-carboxamide (1847460-02-9) + SX, 2-(difluoromethyl)-N-[3-propyl-1,1-dimethyl-2,3-dihydro-1H-inden-4-yl]pyridine-3-carboxamide (1847460-05-2) + SX, (2E,3Z)-5-{[1-(4-chlorophenyl)-1H-pyrazol-3-yl]oxy}-2-(methoxyimino)-N,3-dimethylpent-3-enamide (1445331-27-0) + SX, (2E,3Z)-5-{[1-(2,4-dichlorophenyl)-1H-pyrazol-3-yl]oxy}-2-(methoxyimino)-N,3-dimethylpent-3-enamide (1445331-54-3) + SX, 5-chloro-4-({2-[6-(4-chlorophenoxy)pyridin-3-yl]ethyl}amino)-6-methylpyrimidine (1605340-92-8) + SX, N-(1-benzyl-1,3-dimethylbutyl)-8-fluoroquinoline-3-carboxamide (2132414-04-9) + SX, N-(1-benzyl-3,3,3-trifluoro-1-methylpropyl)-8-fluoroquinoline-3-carboxamide (2132414-00-5) + SX, 4,4-dimethyl-2-({4-[5-(trifluoromethyl)-1,2,4-oxadiazol-3-yl]phenyl}methyl)isoxazolidin-3-one (2098918-25-1) + SX, 5,5-dimethyl-2-({4-[5-(trifluoromethyl)-1,2,4-oxadiazol-3-yl]phenyl}methyl)isoxazolidin-3-one (2098918-26-2) + SX, N-ethyl-2-methyl-N-({4-[5-(trifluoromethyl)-1,2,4-oxadiazol-3-yl]phenyl}methyl)propanamide + SX, N,2-dimethoxy-N-({4-[5-(trifluoromethyl)-1,2,4-oxadiazol-3-yl]phenyl}methyl)propanamide + SX, N-methoxy-N-({4-[5-(trifluoromethyl)-1,2,4-oxadiazol-3-yl]phenyl}methyl)cyclopropanecarboxamide + SX, N-methoxy-N'-methyl-N-({4-[5-(trifluoromethyl)-1,2,4-oxadiazol-3-yl]phenyl}methyl)urea + SX, N'-ethyl-N-methoxy-N-({4-[5-(trifluoromethyl)-1,2,4-oxadiazol-3-yl]phenyl}methyl)urea + SX, N,N'-dimethoxy-N-({4-[5-(trifluoromethyl)-1,2,4-oxadiazol-3-yl]phenyl}methyl)urea + SX, N-acetyl-2-(ethanesulfonyl)-N-[2-(methoxycarbonyl)-4-(trifluoromethoxy)phenyl]-4-(trifluoromethyl)benzamide (2043675-28-9) + SX, 3-(4-bromo-7-fluoroindol-1-yl)butan-2-yl N-[(3-hydroxy-4-methoxypyridin-2-yl)carbonyl]-L-alaninate + SX, 3-(7-bromoindol-1-yl)butan-2-yl N-[(3-hydroxy-4-methoxypyridin-2-yl)carbonyl]-L-alaninate + SX, 3-(7-bromo-4-fluoroindol-1-yl)butan-2-yl N-[(3-hydroxy-4-methoxypyridin-2-yl)carbonyl]-L-alaninate + SX, 3-(3,5-dichloropyridin-2-yl)butan-2-yl N-[(3-hydroxy-4-methoxypyridin-2-yl)carbonyl]-L-alaninate +.SX, 3-(3,5-dichloropyridin-2-yl)butan-2-yl N-{[3-(acetoxymethoxy)-4-methoxypyridin-2-yl]carbonyl}-L-alaninate + SX, (1S)-1-[1-(naphthalen-1-yl)cyclopropyl]ethyl N-[(3-hydroxy-4-methoxypyridin-2-yl)carbonyl]-L-alaninate + SX, (1S)-1-[1-(naphthalen-1-yl)cyclopropyl]ethyl N-[(3-acetoxy-4-methoxypyridin-2-yl)carbonyl]-L-alaninate + SX, (1S)-1-[1-(naphthalen-1-yl)cyclopropyl]ethyl N-{[3-(acetoxymethoxy)-4-methoxypyridin-2-yl]carbonyl}-L-alaninate + SX, N-({4-[5-(trifluoromethyl)-1,2,4-oxadiazol-3-yl]phenyl}methyl)cyclopropanecarboxamide + SX, N-allyl-N-({4-[5-(trifluoromethyl)-1,2,4-oxadiazol-3-yl]phenyl},methyl)acetamide + SX, N-allyl-N-({4-[5-(trifluoromethyl)-1,2,4-oxadiazol-3-yl]phenyl}methyl)propanamide + SX, N-({4-[5-(trifluoromethyl)-1,2,4-oxadiazol-3-yl]phenyl}methyl)propanamide + SX, 3,3,3-trifluoro-N-({2-fluoro-4-[5-(trifluoromethyl)-1,2,4-oxadiazol-3-yl]phenyl}methyl)propanamide + SX, 3,3,3-trifluoro-N-({3-fluoro-4-[5-(trifluoromethyl)-1,2,4-oxadiazol-3-yl]phenyl}methyl)propanamide + SX, 3,3,3-trifluoro-N-({2,3-difluoro-4-[5-(trifluoromethyl)-1,2,4-oxadiazol-3-yl]phenyl}methyl)propanamide + SX, N-({2,3-difluoro-4-[5-(trifluoromethyl)-1,2,4-oxadiazol-3-yl]phenyl}methyl)butanamide + SX, N-methoxy-N-methyl-N'-({4-[5-(trifluoromethyl)-1,2,4-oxadiazol-3-yl]phenyl}methyl)urea + SX, N,N-diethyl-N'-({4-[5-(trifluoromethyl)-1,2,4-oxadiazol-3-yl]phenyl}methyl)urea + SX, N-methyl-N'-({4-[5-(trifluoromethyl)-1,2,4-oxadiazol-3-yl]phenyl}methyl)urea + SX, 1-({4-[5-(trifluoromethyl)-1,2,4-oxadiazol-3-yl]phenyl}methyl)pyrrolidin-2-one + SX, 1-({4-[5-(trifluoromethyl)-1,2,4-oxadiazol-3-yl]phenyl}methyl)piperidin-2-one + SX, 4-({4-[5-(trifluoromethyl)-1,2,4-oxadiazol-3-yl]phenyl}methyl)morpholin-3-one + SX, 2-({4-[5-(trifluoromethyl)-1,2,4-oxadiazol-3-yl]phenyl}methyl)isoxazolidin-3-one + SX, 3,3-dimethyl-1-({4-[5-(trifluoromethyl)-1,2,4-oxadiazol-3-yl]phenyl}methyl)piperidin-2-one + SX, 2-({4-[5-(trifluoromethyl)-1,2,4-oxadiazol-3-yl]phenyl}methyl)-1,2-oxazinan-3-one + SX, 1-({3-fluoro-4-[5-(trifluoromethyl)-1,2,4-oxadiazol-3-yl]phenyl}methyl)azepan-2-one + SX, 4,4-dimethyl-1-({4-[5-(trifluoromethyl)-1,2,4-oxadiazol-3-yl]phenyl}methyl)pyrrolidin-2-one + SX, 5-methyl-1-({4-[5-(trifluoromethyl)-1,2,4-oxadiazol-3-yl]phenyl}methyl)pyrrolidin-2-one + SX, ethyl 1-({4-[5-(trifluoromethyl)-1,2,4-oxadiazol-3-yl]phenyl}methyl)-1H-pyrazole-4-carboxylate + SX, N-methyl-1-({4-[5-(trifluoromethyl)-1,2,4-oxadiazol-3-yl]phenyl}methyl)-1H-pyrazole-4-carboxamide + SX, N-propyl-1-({4-[5-(trifluoromethyl)-1,2,4-oxadiazol-3-yl]phenyl}methyl)-1H-pyrazole-4-carboxamide + SX, N-methoxy-1-({4-[5-(trifluoromethyl)-1,2,4-oxadiazol-3-yl]phenyl}methyl)-1H-pyrazole-4-carboxamide + SX, N-methoxy-N-methyl-1-({4-[5-(trifluoromethyl)-1,2,4-oxadiazol-3-yl]phenyl}methyl)-1H-pyrazole-4-carboxamide + SX, N,N-dimethyl-1-({4-[5-(trifluoromethyl)-1,2,4-oxadiazol-3-yl]phenyl}methyl)-1H-1,2,4-_triazol-3-amine + SX, N-methyl-4-[5-(trifluoromethyl)-1,2,4-oxadiazol-3-yl]benzamide + SX, methyl 2-[2-chloro-4-(4-chlorophenoxy)phenyl]-2-hydroxy-3-(1H-1,2,4-triazol-1-yl)propanoate + SX, ethyl 2-[2-chloro-4-(4-chlorophenoxy)phenyl]-2-hydroxy-3-(1H-1,2,4-triazol-1-yl)propanoate + SX, methyl 2-[2-(trifluoromethyl)-4-(4-chlorophenoxy)phenyl]-2-hydroxy-3-(1H-1,2,4-triazol-1-yl)propanoate + SX, 1-(2,3-dimethylpyridin-5-yl)-4,4-difluoro-3,3-dimethyl-3,4-dihydroisoquinoline + SX, 1-[2-(difluoromethyl)-3-methylpyridin-5-yl]-4,4-difluoro-3,3-dimethyl-3,4-dihydroisoquinoline + SX, 2,2-difluoro-N-[6-({[1-(1-methyl-1H-tetrazol-5-yl)benzimidazol-2-yl]oxy}methyl)pyridin-2-yl]-2-phenoxyacetamide + SX, 1-[2-(1-chlorocyclopropyl)-3-(3-chloro-2-fluorophenyl)-2-hydroxypropyl]-1H-imidazole-5-carbonitrile + SX, ethyl 1-[(4-{[2-(trifluoromethyl)-1,3-dioxolan-2-yl]methoxy}phenyl)methyl]-1H-pyrazole-4-carboxylate + SX, ethyl 1-[(4-{[(1Z)-2-ethoxy-3,3,3-trifluoro-1-propen-1-yl]oxy}phenyl)methyl]-1H-pyrazole-4-carboxylate + SX.

Combinations of the Present ingredient in the above Group (c) and the Present compound:
1-methylcyclopropene + SX, 1,3,5-triazinane-2,4,6-trithione + SX, 1,3-diphenylurea + SX, 2,3,5-triiodobenzoic acid + SX, IAA ((1H-indol-3-yl)acetic acid) + SX, IBA (4-(1H-indol-3-yl)butyric acid) + SX, MCPA (2-(4-chloro-2-methylphenoxy)acetic acid) + SX, MCPB (4-(4-chloro-2-methylphenoxy)butyric acid) + SX, 4-CPA (4-chlorophenoxyacetic acid) + SX, 5-aminolevulinic acid hydrochloride + SX, 6-benzylaminopurine + SX, abscisic acid + SX, AVG (aminoethoxyvinylglycine) + SX, anisiflupurin + SX, ancymidol + SX, butralin + SX, calcium carbonate + SX, calcium chloride + SX, calcium formate + SX, calcium peroxide + SX, calcium polysulfide + SX, calcium sulfate + SX, chlormequat-chloride + SX, chlorpropham + SX, choline chloride + SX, cloprop + SX, cyanamide + SX, cyclanilide + SX, daminozide + SX, decan-1-ol + SX, dichlorprop + SX, dikegulac + SX, dimethipin + SX, diquat + SX, ethephon + SX, ethychlozate + SX, flumetralin + SX, flurprimidol + SX, forchlorfenuron + SX, formononetin + SX, Gibberellin A + SX, Gibberellin A3 + SX, inabenfide + SX, Kinetin + SX, lipochitooligosaccharide SP104 + SX, maleic hydrazide + SX, mefluidide + SX, mepiquat-chloride + SX, oxidized glutathione + SX, paclobutrazol + SX, pendimethalin + SX, prohexadione-calcium + SX, prohydrojasmon + SX, pyraflufen-ethyl + SX, pyroglutamic acid + SX, sintofen + SX, sodium 1-naphthaleneacetate + SX, sodium cyanate + SX, thidiazuron + SX, titanium apatite + SX, triapenthenol + SX, tributes + SX, trinexapac-ethyl + SX, uniconazole-P + SX, 2-(naphthalen-1-yl)acetamide + SX, [4-oxo-4-(2-phenylethyl)amino]butylate + SX, methyl 5-(trifluoromethyl)benzo[b]thiophene-2-carboxylate + SX, 3-[(6-chloro-4-phenylquinazolin-2-yl)amino]propan-1-ol + SX.

Combinations of the Present ingredient in the above Group (d) and the Present compound:
anthraquinone + SX, deet + SX, icaridin + SX.

Combinations of the Present ingredient in the above Group (e) and the Present compound:

Abbreviate caucasica + SX, Acuaria spp. + SX, Agamermis decaudata + SX, Agrobacterium radiobacter strain K1026 + SX, Agrobacterium radiobacter strain K84 + SX, Agrobacterium vitis strain VAR03-1 + SX, Allantonema spp. + SX, Alternaria destruens strain 59 + SX, Alternaria destruens + SX, Ampelomyces quisqualis strain AQ10 + SX, Amphimermis spp. + SX, Arthrobotrys dactyloides + SX, Arthrobotrys superba + SX, Aschersonia aleyrodis + SX, Aspergillus flavus strain AF36 + SX, Aspergillus flavus strain NRRL21882 + SX, Aureobasidium pullulans strain DSM14940 + SX, Aureobasidium pullulans strain DSM14941 + SX, Azorhizobium caulinodans strain ZB-SK-5 + SX, Azotobacter chroococcum strain H23 + SX, Azotobacter chroocuccum + SX, Azotobacter vinelandii strain ATCC12837 + SX, Azotobacter + SX, Bacillus acidocaldarius + SX, Bacillus acidoterrestris + SX, Bacillus Albolactis + SX, Bacillus alcalophilus + SX, Bacillus alvei + SX, Bacillus aminoglucosidicus + SX, Bacillus aminovorans + SX, Bacillus amyloliquefaciens strain PTA-4838 (Aveo(registered trademark) EZ Nematicide) + SX, Bacillus amyloliquefaciens strain AT332 + SX, Bacillus amyloliquefaciens strain B3 + SX, Bacillus amyloliquefaciens strain D747 + SX, Bacillus amyloliquefaciens strain DB101 + SX, Bacillus amyloliquefaciens strain DB102 + SX, Bacillus amyloliquefaciens strain FZB24 + SX, Bacillus amyloliquefaciens strain FZB42 + SX, Bacillus amyloliquefaciens strain GB03 + SX, Bacillus amyloliquefaciens strain IN937a + SX, Bacillus amyloliquefaciens strain MBI600 + SX, Bacillus amyloliquefaciens strain QST713 + SX, Bacillus amyloliquefaciens isolate strain B246 + SX, Bacillus amyloliquefaciens strain F727 + SX, Bacillus amyloliquefaciens subsp. Plantarum strain D747 + SX, Bacillus amylolyticus + SX, Bacillus aneurinolyticus + SX, Bacillus agri + SX, Bacillus atrophaeus + SX, Bacillus atrophaeus strain Abi05 + SX, Bacillus azotoformans + SX, Bacillus badius + SX, Bacillus cereus strain BP01 + SX, Bacillus cereus CNCM strain 1-1562 + SX, Bacillus chitinosporus strain AQ746 + SX, Bacillus chitinosporus strain CM-1 + SX, Bacillus circulans + SX, Bacillus coagulans strain TQ33 + SX, Bacillus fastidiosus + SX, Bacillus firmus strain GB-126 + SX, Bacillus firmus strain I-1582 + SX, Bacillus firmus strain NCIM2637 + SX, Bacillus lacticola + SX, Bacillus lactimorbus + SX, Bacillus lactis + SX, Bacillus lautus + SX, Bacillus Lentimorbus + SX, Bacillus lentus + SX, Bacillus licheniformis strain FMCH001 + SX, Bacillus licheniformis strain HB-2 + SX, Bacillus licheniformis strain SB3086 + SX, Bacillus maroccanus + SX, Bacillus medusa + SX, Bacillus megaterium strain YFM3.25 + SX, Bacillus methylotrophicus strain BAC-9912 + SX, Bacillus metiens + SX, Bacillus mojavensis strain SR11 + SX, Bacillus mycoides strain AQ726 + SX, Bacillus mycoides isolate J + SX, Bacillus nematocida + SX, Bacillus nigrificans + SX, Bacillus nigrum + SX, Bacillus popilliae + SX, Bacillus psychrosaccharolyticus + SX, Bacillus pumilus strain AQ717 + SX, Bacillus pumilus strain BUF-33 + SX, Bacillus pumilus strain GB34 + SX, Bacillus pumilus strain QST2808 + SX, Bacillus siamensis + SX, Bacillus simplex strain CGF2856 + SX, Bacillus smithii + SX, Bacillus sp. strain AQ175 + SX, Bacillus sp. strain AQ177 + SX, Bacillus sp. strain AQ178 + SX, Bacillus sphaericus strain 2362 serotype H5a5b + SX, Bacillus sphaericus strain ABTS1743 + SX, Bacillus subtilis strain AFS032321 + SX, Bacillus subtilis strain AQ153 + SX, Bacillus subtilis strain AQ743 + SX, Bacillus subtilis strain B246 + SX, Bacillus subtilis strain C-3102 + SX, Bacillus subtilis strain D747 + SX, Bacillus subtilis strain DB101 + SX, Bacillus subtilis strain DB102 + SX, Bacillus subtilis strain FMCH002 + SX, Bacillus subtilis strain FZB24 + SX, Bacillus subtilis strain GB03 + SX, Bacillus subtilis strain HAI0404 + SX, Bacillus subtilis strain IAB/BS03 + SX, Bacillus subtilis strain MBI600 + SX, Bacillus subtilis strain QST30002/AQ30002 + SX, Bacillus subtilis strain QST30004/AQ30004 + SX, Bacillus subtilis strain QST713 + SX, Bacillus subtilis strain QST714 + SX, Bacillus subtilis var. Amyloliquefaciens strain FZB24 + SX, Bacillus subtilis strain Y1336 + SX, Bacillus subtillis subsp. natto + SX, Bacillus subtilis strain RTI477 + SX, Bacillus subtilis strain N5 NRRL B-50391 + SX, Bacillus subtilis strain DSM17231 + SX, Bacillus tequilensis strain NII-0943 + SX, Bacillus thuringiensis strain AQ52 + SX, Bacillus thuringiensis strain BD#32 + SX, Bacillus thuringiensis strain CR-371 + SX, Bacillus thuringiensis strain EX297512 + SX, Bacillus thuringiensis subsp. Aizawai strain ABTS-1857 + SX, Bacillus thuringiensis subsp. Aizawai strain GC-91 + SX, Bacillus thuringiensis subsp. Aizawai strain NB200 + SX, Bacillus thuringiensis subsp. Aizawai Serotype H-7 + SX, Bacillus thuringiensis subsp. Kurstaki strain ABTS351. + SX, Bacillus thuringiensis subsp. Kurstaki strain BMP123 + SX, Bacillus thuringiensis subsp. Kurstaki strain CCT1306 + SX, Bacillus thuringiensis subsp. Kurstaki strain EG2348 + SX, Bacillus thuringiensis subsp. Kurstaki strain EG2371 + SX, Bacillus thuringiensis subsp. Kurstaki strain EG7673 + SX, Bacillus thuringiensis subsp. Kurstaki strain EG7841 + SX, Bacillus thuringiensis subsp. Kurstaki strain EVB113-19 + SX, Bacillus thuringiensis subsp. Kurstaki strain F810 + SX, Bacillus thuringiensis subsp. Kurstaki strain HD-1 + SX, Bacillus thuringiensis subsp. Kurstaki strain M-200 + SX, Bacillus thuringiensis subsp. Kurstaki strain NCIM2514 + SX, Bacillus thuringiensis subsp. Kurstaki strain PB54 + SX, Bacillus thuringiensis subsp. Kurstaki strain SA-11 + SX, Bacillus thuringiensis subsp. Kurstaki strain SA-12 + SX, Bacillus thuringiensis subsp. Kurstaki strain VBTS-2546 + SX, Bacillus thuringiensis subsp. Kurstaki strain Z-52, serotype H-3a,3b + SX, Bacillus thuringiensis subsp. morrisoni + SX, Bacillus thuringiensis subsp. Tenebriosis strain NB 176 + SX, Bacillus thuringiensis subsp. tenebriosis strain SA-10 + SX, Bacillus thuringiensis subsp. Thuringiensis strain MPPL002 + SX, Bacillus thuringiensis subsp. var. colmeri + SX, Bacillus thuringiensis subsp. var. darmstadiensis strain 24-91 + SX, Bacillus thuringiensis subsp. var. dendrolimus + SX, Bacillus thuringiensis subsp. var. galleriae + SX, Bacillus thuringiensis subsp. israelensis strain BMP144 + SX, Bacillus thuringiensis subsp. israelensis strain AM65-52 + SX, Bacillus thuringiensis subsp. israelensis (serotype H-14) strain AM65-52 + SX, Bacillus thuringiensis subsp. israelensis strain EG2215 + SX, Bacillus thuringiensis subsp. israelensis strain SA3A + SX, Bacillus thuringiensis subsp. israelensis strain SUM-6218 + SX, Bacillus thuringiensis subsp. israelensis strain VCRC B17 serotype 11-14 + SX, Bacillus thuringiensis subsp. var. japonensis strain buibui + SX, Bacillus thuringiensis

subsp. var. aegypti + SX, Bacillus thuringiensis var. 7216 + SX, Bacillus thuringiensis var. sandiego strain M-7 + SX, Bacillus thuringiensis var. T36 + SX, Bacillus velezensis + SX, Bacillus velezensis*strain RTI301 + SX, Bacillus velezensis strain FZB42 + SX, bacteriophage of Clavibacter michiganesis + SX, Beauveria bassiana strain ANT-03 + SX, Beauveria bassiana strain ATCC74040 + SX, Beauveria bassiana strain GHA + SX, Beauveria bassiana strain PPRI 5339 + SX, Beauveria bassiana strain IMI389521 + SX, Beauveria brongniartii + SX, Deladenus siridicola + SX, Bovienema spp. + SX, Brevibacillus brevis strain 2904 + SX, Brevibacillus brevis strain SS86-3 + SX, Brevibacillus brevis strain SS86-4 + SX, Brevibacillus brevis strain SS86-5 + SX, Brevibacillus laterosporus strain ATCC64 + SX, Brevibacillus laterosporus strain BPM3 + SX, Brevibacillus laterosporus strain G4 + SX, Brevibacillus laterosporus strain NCIMB 41419 + SX, Brevibacillus laterosporus strain NRS1111 + SX, Brevibacillus laterosporus strain NRS1645 + SX, Brevibacillus laterosporus strain NRS1647 + SX, Burkholderia cepacia type Wisconsin strain J82 + SX, Burkholderia cepacia type Wisconsin strain M54 + SX, Burkholderia cepacia + SX, Burkholderia gladii strain BA-7 + SX, Burkholderia rinojensis strain A396 + SX, Cameronia spp. + SX, Candida oleophila strain O + SX, Candida saitoana + SX, Candida spp. + SX, Chaetomium cupreum + SX, Chitwoodiella ovofilamenta + SX, Chromobacterium subtsugae strain PRAA4-1T + SX, Cladosporium cladosporioides strain H39 + SX, Conidiobolus obscurus + SX, Coniothyrium minitans strain CGMCC8325 + SX, Coniothyrium minitans strain CON/M/91-08 + SX, Contortylenchus spp. + SX, cryptococcus albidus + SX, Culicimermis spp. + SX, Dactyllela ellipsospora + SX, Dectylaria thaumasia + SX, Delftia acidovorans strain RAY209 + SX, Dilophosphora alopecuri + SX, Diplotriaeria spp. + SX, Empidomermis spp. + SX, Entomophthora virulenta + SX, Erwinia carotovora subsp. carotovora strain CGE234M403 + SX, Filipjevimermis leipsandra + SX, Fusarium oxysporum strain Fo47 + SX, Fusarium oxysporum strain RS-21 + SX, Fusarium oxysporum strain RS-25 + SX, Fusariumproliferatum + SX, Gastromermis spp. + SX, Gliocladium catenulatum strain J1446 + SX, gluconacetobacter diazotrophicus + SX, Gongylonema spp. + SX, Gynopoecilia pseudovipara + SX, Harpin protein + SX, Heterorhabditis bacteriophora + SX, Heterorhabditis baujardi + SX, Heterorhabditis heliothidis + SX, Heterorhabditis indica + SX, Heterorhabditis marelatus + SX, Heterorhabditis megidis + SX, Heterorhabditis zealandica + SX, Hexamermis spp. + SX, Hirsutella minnesotensis + SX, Hirsutella rhossiliensis + SX, Hirsutella thompsonii + SX, Hydromermis spp. + SX, Isaria fumosorosea + SX, Isomermis spp. + SX, Lactobacillus acidophilus + SX, Lactobacillus brevis + SX, Lactobacillus plantarum + SX, Lactobacillus spp. + SX, Lagenidium giganteum + SX, Lecanicillium lecanii KV01 + SX, Lecanicillium lecanii conidia of strain DAOM198499 + SX, Lecanicillium lecanii conidia of strain DAOM216596 + SX, Lecanicillium muscarium strain Ve6 + SX, Limnomermis spp. + SX, Lysobacter antibioticus strain 13-1 + SX, Lysobacter enzymogenes strain C3 + SX, Maupasina weissi + SX, Mermis nigrescens + SX, Mesomermis spp. + SX, Metarhizium anisopliae strain F52 + SX, Metarhizium anisopliae var. acridum + SX, Metarhizium anisopliae var. anisopliae BIPESCO 5/F52 + SX, Metarhizium flavoviride + SX, Metschnikowia fructicola strain NRRLY-30752 + SX, Microsphaeropsis ochracea + SX, Monacrosporium phymatopagum + SX, Mucor hiemalis + SX, Muscodor albus strain 620 + SX, Muscodor albus strain QST 20799 + SX, Muscodor albus strain SA13 + SX, Muscodor roseus strain A3-5 + SX, Myrothecium verrucaria strain AARC-0255 + SX, Neomesomermis spp. + SX, Neoparasitylenchus rugulosi + SX, Nomuraea rileyi strain CG128 + SX, Nomuraea rileyi strain GU87401 + SX, Nomuraea rileyi strain SA86101 + SX, Nomuraea rileyi strain SR86151 + SX, Nomuraea rileyi strain VA9101 + SX, Nosema locustae + SX, Octomyomermis spp. + SX, Ophiostoma piliferum strain D97 + SX, Isaria fumosorosea Apopka strain 97 + SX, Paecilomyces lilacinus strain 251 + SX, Paecilomyces tenuipes strain T1 + SX, Paecilomyces variotii strain Q-09 + SX, Paenibacillus alvei strain 2771 + SX, Paenibacillus alvei strain 46C3 + SX, Paenibacillus alvei strain III2E + SX, Paenibacillus alvei strain III3DT-1A + SX, Paenibacillus alvei strain T36 + SX, Paenibacillus macerans + SX, Paenibacillus polymyxa strain AC-1 + SX, Paenibacillus polymyxa strain BS-0105 + SX, Paenibacillus popilliae + SX, Pandora delphacis + SX, Pantoea agglomerans strain E325 + SX, Pantoea vagans strain C9-1 + SX, Parasitaphelenchus spp. + SX, Parasitorhabditis spp. + SX, Parasitylenchus spp. + SX, Pasteuria nishizawae strain Pn1 + SX, Pasteuria penetrans + SX, Pasteuria ramose + SX, Pasteuria usgae + SX, Pectobacterium carotovorum + SX, Penicillium bilaiae strain ATCC22348 + SX, Penicillium citrinum strain VFI-51 + SX, Penicillium vermiculatum + SX, Perutilimermis culicis + SX, Pasteuria thornei + SX, Phasmarhabditis hermaphrodita + SX, phlebiopsis gigantea strain VRA1992 + SX, Physaloptera spp. + SX, phytophthora palmivora + SX, Pichia anomala strain WRL-076 + SX, pichia guilliermondii strain Z1 + SX, pichia guilliermondii strain Z8 + SX, Pochonia chlamydosporia isolate strain PC10 + SX, Pochonia chlamydosporia + SX, Protrellatus spp. + SX, Pseudomonas aeruginosa strain PN1 + SX, Pseudomonas aeruginosa strain WS-1 + SX, Pseudomonas aureofaciens strain TX-1 + SX, Pseudomonas cepacia type Wisconsin strain J82 + SX, Pseudomonas cepacia type Wisconsin strain M54 + SX, Pseudomonas chlororaphis strain 63-28 + SX, Pseudomonas chlororaphis strain AFS009 + SX, Pseudomonas chlororaphis strain MA342 + SX, pseudomonas fluorescens strain 1629RS + SX, pseudomonas fluorescens strain A506 + SX, pseudomonas fluorescens strain CL145A + SX, Pseudomonas fluorescens strain G7090 + SX, Pseudomonas fluorescens biover B strain XJ3 + SX, Pseudomonas fluorescens biover B strain XS18 + SX, Pseudomonas fluorescens biover A strain LRS12 + SX, Pseudomonas proradix + SX, Pseudomonas putida + SX, Pseudomonas reactans + SX, Pseudomonas resinovorans + SX, Pseudomonas rhodesiae strain HAI-0804 + SX, Pseudomonas sp. strain CAB-02 + SX, Pseudomonas syringae strain 742RS + SX, Pseudomonas syringae strain MA-4 + SX, Pseudozyma flocculosa strain PF-A22UL + SX, Pterygodermatites spp. + SX, puccinia thlaspeos strain woad + SX, Purpureocillium lilacinum + SX, Pythium oligandrum strain DV74 + SX, Pythium oligandrum strain M1 + SX,

Rhodococcus globerulus strain AQ719 + SX, Romanomermis spp. + SX, saccharomyces cerevisiae strain LAS02 + SX, saccharomyces cerevisiae strain DDSF623 + SX, sclerotinia minor strain IMI34414 + SX, Serratia entomophila + SX, Serratia marcescens strain 35 + SX, Serratia marcescens strain SRM + SX, Seuratum cadarachense + SX, Sphaerulariopsis spp. + SX, Spirura guianensis + SX, Sporothrix insectorum + SX, Steinernema bibionis + SX, Steinernema carpocapsae + SX, Steinernema feltiae + SX, Steinernema glaseri + SX, Steinernema kraussei + SX, Steinernema riobrave + SX, Steinernema scapterisci + SX, Steinernema scarabaei + SX, Steinernema siamkayai + SX, Steinernema thailandse + SX, Steinernema spp. + SX, Strelkovimermis peterseni + SX, Streptomyces acidiscabies strain RL-110T + SX, Streptomyces candidus strain Y21007-2 + SX, Streptomyces colombiensis + SX, Streptomyces galbus strain QST6047 + SX, Streptomyces goshikiensis + SX, Streptomyces griseoviridis strain K61 + SX, Streptomyces lavendulae + SX, Streptomyces lydicus strain WYCD108US + SX, Streptomyces lydicus strain WYEC108 + SX, Streptomyces microflavus strain AQ6121 + SX, Streptomyces prasinus + SX, Streptomyces rimosus + SX, Streptomyces saraceticus + SX, Streptomyces sp. strain NRRL No.B-30145 + SX, Streptomyces sp. strain WYE20 + SX, Streptomyces sp. strain WYE 324 + SX, Streptomyces venezuelae + SX, Subulura spp. + SX, Sulphuretylenchus elongatus + SX, Talaromyces flavus strain SAY-Y-94-01 + SX, Talaromyces flavus strain V117b + SX, Tetrameres spp. + SX, Thelohania solenopsis + SX, Thiobacillus spp. + SX, Trichoderma album + SX, Trichoderma asperelloides strain JM41R + SX, Trichoderma asperellum strain ICC012 + SX, Trichoderma asperellum T25 + SX, Trichoderma asperellum strain T34 + SX, Trichoderma asperellum strain SKT-1 + SX, Trichoderma asperellum strain TV1 + SX, Trichoderma atroviride strain CNCM 1-1237 + SX, Trichoderma atroviride strain LC52 + SX, Trichoderma atroviride strain IMI 206040 + SX, Trichoderma atroviride strain SC1 + SX, Trichoderma atroviride strain SKT-1 + SX, Trichoderma atroviride strain T11 + SX, Trichoderma gamsii strain ICC080 + SX, Trichoderma harzianum strain 21 + SX, Trichoderma harzianum strain DB 104 + SX, Trichoderma harzianum strain DSM 14944 + SX, Trichoderma harzianum strain ESALQ-1303 + SX, Trichoderma harzianum strain ESALQ-1306 + SX, Trichoderma harzianum strain IIHR-Th-2 + SX, Trichoderma harzianum strain ITEM908 + SX, Trichoderma harzianum strain kd + SX, Trichoderma harzianum strain MO1 + SX, Trichoderma harzianum strain SF + SX, Trichoderma harzianum strain T22 + SX, Trichoderma harzianum strain T39 + SX, Trichoderma harzianum strain T78 + SX, Trichoderma harzianum strain TH35 + SX, Trichoderma harzianum rifai + SX, Trichoderma harzianum strain K2 + SX, Trichoderma harzianum strain F11Bab + SX, Trichoderma harzianum strain RR17Bc + SX, Trichoderma koningii + SX, Trichoderma lignorum + SX, Trichoderma polysporum strain IMI206039 + SX, Trichoderma spp. + SX, trichoderma stromaticum + SX, Trichoderma virens strain G-41 + SX, Trichoderma virens strain GL-21, formaly Gliocladium virens GL-21 + SX, Trichoderma viride + SX, Trichoderma viride strain K5 + SX, Trichoderma viride strain NRRL B-S0S20 + SX, Tsukamurella paurometabola + SX, Typhula phacorrhiza strain 94671 + SX, Ulocladium oudemansii strain HRU3 + SX, Vairimorpha spp. strain Q-09 + SX, Variovorax paradoxus strain GF4526 + SX, Verticillium alboatrum strain WCS850 + SX, Verticillium chlamydosporium + SX, Verticillium dahliae + SX, Verticillium lecani strain NCIM1312 + SX, Virgibacillus pantothenticus strain ATCC14576 + SX, Virgibacillus pantothenticus strain DSM491 + SX, Wolbachia pipientis + SX, Xanthomonas campestris pv poae + SX, Xanthomonas campestris + SX, Xenorhabdus luminescens + SX, Xenorhabdus nematophila + SX, Zoophtora radicans + SX, Acaulospora spp. + SX, Ambispora spp. + SX, Archaeospora spp. + SX, Claroideoglomus spp. + SX, Claroideoglomus etunicatum + SX, Claroideoglomus claroideum + SX, Diversispora spp. + SX, Entrophospora spp. + SX, Funneliformis spp. + SX, Funneliformis mosseae + SX, Geosiphon spp. + SX, Gigaspora spp. + SX, Gigaspora margarita + SX, Gigaspora rosea + SX, Glomus spp. + SX, Glomus aggregatum + SX, Glomus deserticola + SX, Glomus monosporum + SX, Pacispora spp. + SX, Paraglomus spp. + SX, Paraglomus brasilianum + SX, Racocetra spp. + SX, Rhizophagus spp. + SX, Rhizophagus clarus + SX, Rhizophagus intraradices + SX, Rhizophagus irregularis + SX, Rhizophagus irregularis strain DAOM 197198 + SX, Scutellospora spp. + SX, Azorhizobium spp. + SX, Azorhizobium caulinodans + SX, Azospirillum amazonense + SX, Azospirillum brasilense + SX, Azospirillum brasilense strain XOH + SX, Azospirillum brasilense strain Ab-V5 + SX, Azospirillum brasilense strain Ab-V6 + SX, Azospirillum caulinodans + SX, Azospirillum halopraeferens + SX, Azospirillum irakense + SX, Azospirillum lipoferum + SX, Bradyrhizobium spp. + SX, Bradyrhizobium elkanii + SX, Bradyrhizobium elkanii strain SEMIA 587 + SX, Bradyrhizobium elkanii strain SEMIA 5019 + SX, Bradyrhizobium japonicum + SX, Bradyrhizobium japonicum strain TA-11 + SX, Bradyrhizobium japonicum strain USDA 110 + SX, Bradyrhizobium liaoningense + SX, Bradyrhizobium lupini + SX, Bradyrhizobium spp. (Arachis) + SX, Bradyrhizobium spp. (Vigna) + SX, Delftia acidovorans + SX, Delftia acidovorans strain RAY209 + SX, Metylobacterium spp. + SX, Mesorhizobium ciceri + SX, Mesorhizobium huakii + SX, Mesorhizobium loti + SX, Mesorhizobium spp. + SX, Rhizobium etli + SX, Rhizobium galegae + SX, Rhizobium leguminosarum bv. Phaseoli + SX, Rhizobium leguminosarum bv. Trifolii + SX, Rhizobium leguminosarum bv. Viciae + SX, Rhizobium trifolii + SX, Rhizobium tropici + SX, Sinorhizobium fredii + SX, Sinorhizobium meliloti + SX, Arkansas Fungus 18 + SX, Beauveria bassiana strain ATP02 + SX, Beauveria bassiana strain CG716 + SX, Candida oleophila isolate I-182 + SX, Colletotrichum gloeosporioides + SX, Cryptococcus flavescens + SX, Gliocladium roseum + SX, Glomus etunicatum + SX, Glomus iranicum + SX, Laccaria bicolor + SX, Laccaria laccata + SX, Lecanicillium muscarium strain 1/1 + SX, Metarhizium anisopliae var. acridum isolate IMI 330189 + SX, Isaria fumosorosea strain FE9901 + SX, Phlebiopsis + SX, Phoma macrostroma strain94-44B + SX, Acaulospora longula + SX, Ambispora leptoticha + SX, cell walls of Saccharomyces cerevisiae strain LAS117 + SX, Claroideoglomus claroideum + SX, Claroideoglomus luteum + SX,

Pisolithus tinctorius + SX, Rhizopogon amylopogon + SX, Rhizopogon fulvigleba + SX, Rhizopogon luteolus + SX, Rhizopogon villosullus + SX, Scleroderma cepa + SX, Scleroderma citrinum + SX, Suillus granulatus + SX, Suillus punctatapies + SX, Trichoderma asperellum strain kd + SX, Trichoderma atroviride strain LU132 + SX, Trichoderma atroviride strain 77B + SX, Trichoderma atroviride strain K4 + SX, Trichoderma atroviride strain WW10TC4 + SX, Trichoderma harmatum strain TH382 + SX, Trichoderma lignorum strain TL-0601 + SX, Trichoderma saturnisporium strain PBP-TH-001 + SX, Tsukamurella paurometabola strain C-924 + SX, Gluconactobacter diazotrophicus strain IMI504853 + SX, Clonostachys rosea strain IDAC 040913-01 + SX, Bacillus cereus Bromelia strain NRRL B-50766 + SX, Bacillus cereus Peumo strain NRRL B-50767 + SX, Bacillus thuringiensis Anemophyla strain NRRL B-50765 + SX, Trichoderma harzianuna strain Gomorteka NRRL 67322 + SX, Bacillus licheniformis strain DSM17236 + SX, Bacillus licheniformis strain copihue NRRL B-67023 + SX, Trichoderma reesei + SX, Corynebacterium flavescens strain B2575 + SX, Chlorella + SX, Methylobacterium isolate ISO01 + SX, Methylobacterium isolate ISO02 (NRRL B-50930) + SX, Methylobacterium isolate ISO03 (NRRL B-50931) + SX, Methylobacterium isolate ISO04 (NRRL B-50932) + SX, Methylobacterium isolate ISO07 + SX, Methylobacterium isolate ISO09 (NRRL B-50937) + SX, Methylobacterium isolate. ISO10 (NRRL B-50938) + SX, Methylobacterium isolate ISO11 (NRRL B- 50939) + SX, Klebsiella variicola 137 + SX, Adoxophyes orana granulosis virus strain BV-0001 + SX, Anticarsia gemmatalis mNPV + SX, Autographa californica mNPV + SX, Cydia pomonella GV strain V15 + SX, Cydia pomonella GV strain V22 + SX, Cryptophlebia leucotreta GV + SX, Cydia pomonella GV strain CP4 + SX, Cydia pomonella GV strain R5 + SX, Dendrolimus punctatus cypovirus + SX, Helicoverpa armigera NPV strain BV-0003 + SX, Helicoverpa zea NPV + SX, Lymantria dispar NPV + SX, Mamestra brassicae NPV + SX, Mamestra configurata NPV + SX, Neodiprion abietis NPV + SX, Neodiprion lecontei NPV + SX, Neodiprion sertifer NPV + SX, Nosema locustae + SX, Orgyia pseudotsugata NPV + SX, Pieris rapae GV + SX, Plodia interpunctella GV + SX, Spodoptera exigua mNPV + SX, Spodoptera littoralis mNPV + SX, Spodoptera litura NPV + SX, BT crop protein Cry1Ab + SX, BT crop protein Cry1Ac + SX, BT crop protein Cry1Fa + SX, BT crop protein Cry1A.105 + SX, BT crop protein Cry2Ab + SX, BT crop protein Vip3A + SX, BT crop protein mCry3A + SX, BT crop protein Cry3Ab + SX, BT crop protein Cry3Bb + SX, BT crop protein Cry34Ab1/Cry35Ab1 + SX, chitin + SX, colletochlorin B + SX, concanamycin A + SX, ryanodine + SX, cevadine + SX, veratridine + SX, pyrethrin I + SX, pyrethrin II + SX, cinerin I + SX, cinerin II + SX, jasmolin I + SX, jasmolin II + SX, leaves and bark of Quercus + SX, dried leaves of Dryopteris filix-mas + SX, extract of Artemisia absinthium + SX, extract of Cassia nigricans + SX, extract of clitoria ternatea + SX, extract of Symphytum officinale + SX, extract of Chenopodium ambrosioides + SX, extract of Tanacetum vulgare + SX, extract of Urtica dioica + SX, extract of Viscum album + SX, oil of the seeds of Chenopodium anthelminticum + SX, wood extract of Quassia amara + SX, extract of Melaleuca alternifolia + SX, extract of Reynoutria sachalinensis + SX, extract of the cotyledons of lupine plantlets ("BLAD") + SX, extract of Allium sativum + SX, extract of Equisetum arvense + SX, extract of Tropaeolum majus + SX, extract of Azadirachta indica + SX, Quillaja extract + SX, yellow mustard powder + SX, seed extract of Schoenocaulon spp. + SX, extract of Pyrethrum + SX, Gougerotin + SX, matrine + SX, ascaridole + SX, capsicin + SX, deguelin + SX, nootkatone + SX, pellitorine + SX, piperine + SX, extract from Swinglea glutinosa + SX, cytokinin + SX, N,N'-diformylurea + SX, salicylic acid + SX.

The ratio of the Present compound to the Present ingredient includes, but is not limited to, as a ratio by weight (the Present compound : the Present ingredient) 1,000 : 1 to 1 : 1,000, 500 : 1 to 1 : 500, 100 : 1 to 1 : 100, 50 . 1, 20 . 1, 10 : 1, 9 : 1, 8 : 1, 7 : 1, 6 . 1, 5 : 1, 4 : 1, 3 . 1, 2 : 1, 1 : 1, 1 : 2, 1 : 3, 1 : 4, 1 : 5, 1 : 6, 1 : 7, 1 : 8, 1 : 9, 1 : 10, 1 : 20, and 1 : 50, and the others.

The Present compound has control effect on harmful arthropods such as harmful insects and harmful mites, and harmful nematodes. Examples of the harmful arthropods and the harmful nematodes include the followings.

Hemiptera:

from the family Delphacidae, for example, small brown planthopper (Laodelphax striatellus), brown planthopper (Nilaparvata lugens), white-backed planthopper (Sogatella furcifera), corn planthopper (Peregrinus maidis), cereal leafhopper (Javesella pellucida), sugarcane leafhopper (Perkinsiella saccharicida), and Tagosodes orizicolus;

from the family Cicadellidae, for example, green rice leafhopper (Nephotettix cincticeps), green paddy leafhopper (Nephotettix virescens), rice leafhopper (Nephotettix nigropictus), zigzag-striped leafhopper (Recilia dorsalis), tea green leafhopper (Empoasca onukii), potato leafhopper (Empoasca fabae), corn leafhopper (Dalbulus maidis), rice leafhopper (Cofana spectra), and Amrasca biguttula biguttula;

from the family Aphrophoridae, for example, European spittlebug (Philaenus spumarius);

from the family Cercopidae, for example, Mahanarva posticata and Mahanarva fimbriolata;

from the family Aphididae, for example, bean aphid (Aphis fabae), soybean aphid (Aphis glycines), cotton aphid (Aphis gossypii), green apple aphid (Aphis pomi), apple aphid (Aphis spiraecola), green peach aphid (Myzus persicae), leaf-curling plum aphid (Brachycaudus helichrysi), cabbage aphid (Brevicoryne brassicae), rosy apple aphid (Dysaphis plantaginea), false cabbage aphid (Lipaphis erysimi), potato aphid (Macrosiphum euphorbiae),

foxglove aphid (Aulacorthum solani), lettuce aphid (Nasonovia ribisnigri), grain aphid (Rhopalosiphum padi), corn aphid (Rhopalosiphum maidis), brown citrus aphid (Toxoptera citricida), mealy plum aphid (Hyalopterus pruni), cane aphid (Melanaphis sacchari), black rice root aphid (Tetraneura nigriabdominalis), sugarcane cottony aphid (Ceratovacuna lanigera), apple woolly aphid (Eriosoma lanigerum), and English grain aphid (Sitobion avenae);
from the family Phylloxeridae, for example, grapevine phylloxera (Daktulosphaira vitifoliae), Pecan phylloxera (Phylloxera devastatrix), Pecan leaf phylloxera (Phylloxera notabilis), and Southern pecan leaf phylloxera (Phylloxera russelae) ;
from the family Adelgidae, for example, hemlock woolly aphid (Adelges tsugae), balsam woolly aphid (Adelges piceae), and Aphrastasia pectinatae;
from the family Pentatomidae, for example, black rice bug (Scotinophara lurida), black paddy bug (Scotinophara coarctata), common green stink bug (Nezara antennata), white-spotted spined bug (Eysarcoris aeneus), lewis spined bug (Eysarcoris lewisi), white-spotted bug (Eysarcoris ventralis), Eysarcoris annamita, brown marmorated stink bug (Halyomorpha halys), green plant bug (Nezara viridula), brown stink bug (Euschistus heros), red banded stink bug (Piezodorus guildinii), Oebalus pugnax, and Dichelops melacanthus;
from the family Cydnidae, for example, Scaptocoris castanea;
from the family Alydidae, for example, bean bug (Riptortus clavatus), corbett rice bug (Leptocorisa chinensis), and rice bug (Leptocorisa acuta);
from the family Coreidae, for example, Cletus punctiger and Australian leaf-footed bug (Leptoglossus australis);
from the family Lygaeidae, for example, oriental chinch bug (Cavelerius saccharivorus), seed bug (Togo hemipterus), and chinch bug (Blissus leucopterus);
from the family Miridae, for example, rice leaf bug (Trigonotylus caelestialium), sorghum plant bug (Stenotus rubrovittatus), wheat leaf bug (Stenodema calcarata), and American tarnished plant bug (Lygus lineolaris);
from the family Aleyrodidae, for example, greenhouse whitefly (Trialeurodes vaporariorum), tobacco whitefly (Bemisia tabaci), citrus whitefly (Dialeurodes citri), citrus spiny whitefly (Aleurocanthus spiniferus), tea spiny whitefly (Aleurocanthus camelliae), and Pealius euryae;
from the family Diaspididae, for example, Abgrallaspis cyanophylli, red scale (Aonidiella aurantii), San Jose scale (Diaspidiotus perniciosus), white peach scale (Pseudaulacaspis pentagona), arrowhead scale (Unaspis yanonensis), and citrus snow scale (Unaspis citri);
from the family Coccidae, for example, pink wax scale (Ceroplastes rubens);
from the family Margarodidae, for example, fluted scale (Icerya purchasi) and seychelles fluted scale (Icerya seychellarum);
from the family Pseudococcidae, for example, solanum mealybug (Phenacoccus solani), cotton mealybug (Phenacoccus solenopsis), Japanese mealybug (Planococcus kraunhiae), white peach scale (Pseudococcus comstocki), citrus mealybug (Planococcus citri), currant mealybug (Pseudococcus calceolariae), long-tailed mealybug (Pseudococcus longispinus), and tuttle mealybug (Brevennia rehi);
from the family Psyllidae, for example, citrus psylla (Diaphorina citri), two-spotted citrus psyllid (Trioza erytreae), pear sucker (Cacopsylla pyrisuga), Cacopsylla chinensis, potato psyllid (Bactericera cockerelli), and Pear psylla (Cacopsylla pyricola);
from the family Tingidae, for example, sycamore lace bug (Corythucha ciliata), aster tingid (Corythucha marmorata), Japanese pear lace bug (Stephanitis nashi), and azalea lace bug (Stephanitis pyrioides);
from the family Cimicidae, for example, common bed bug (Cimex lectularius) and tropical bed bug(Cimex hemipterus);
from the family Cicadidae, for example, Quesada gigas;
from the family Reduviidae, for example, Triatoma infestans, large kissing bug (Triatoma rubrofasciata), Triatoma dimidiata, and Rhodonius prolixus;

and the others.
Lepidoptera:

from the family Crambidae, for example, rice stem borer (Chilo suppressalis), Dark-headed stem borer (Chilo polychrysus), white stem borer (Scirpophaga innotata), yellow paddy borer (Scirpophaga incertulas), Rupela albina, rice leaf roller (Cnaphalocrocis medinalis), Marasmia patnalis, rice leaf roller (Marasmia exigua), cotton leaf roller (Notarcha derogata), corn borer (Ostrinia furnacalis), European corn borer (Ostrinia nubilalis), cabbage webworm (Hellula undalis), grape leafroller (Herpetogramma luctuosale), bluegrass webworm (Parapediasia teterrellus), rice case-worm (Nymphula depunctalis), Sugarcane borer (Diatraea saccharalis), and eggplant fruit borer (Leucinodes orbonalis);
from the family Pyralidae, for example, lesser cornstalk borer (Elasmopalpus lignosellus), mealworm moth

(Plodia interpunctella), persimmon bark borer (Euzophera batangensis), and fig moth (Cadra cautella);
from the family Noctuidae, for example, cotton worm (Spodoptera litura), beet armyworm (Spodoptera exigua), rice armyworm (Mythimna separata), cabbage moth (Mamestra brassicae), pink borer (Sesamia inferens), grass armyworm (Spodoptera mauritia), green rice caterpillar (Naranga aenescens), Spodoptera frugiperda, true armyworm (Spodoptera exempta), Spodoptera cosmioides, semitropical armyworm (Spodoptera eridania), black cutworm (Agrotis ipsilon), beet worm (Autographa nigrisigna), rice looper (Plusia festucae), Soybean looper (Chrysodeixis includens), Trichoplusia spp., Heliothis spp. (such as tobacco budworm (Heliothis virescens)), Helicoverpa spp. (such as tobacco budworm (Helicoverpa armigera) and corn earworm (Helicoverpa zea)), velvet-bean caterpillar (Anticarsia gemmatalis), cotton leafworm (Alabama argillacea), and hop vine borer (Hydraecia immanis);
from the family Pieridae, for example, common cabbage worm (Pieris rapae);
from the family Tortricidae, for example, oriental fruit moth (Grapholita molesta), Grapholita dimorpha, soybean moth (Leguminivora glycinivorella), Matsumuraeses azukivora, summer fruit tortrix (Adoxophyes orana fasciata), smaller tea tortrix (Adoxophyes honmai), Japanese tea tortrix (Homona magnanima), apple tortrix (Archips fuscocupreanus), codling moth (Cydia pomonella), sugarcane shoot borer (Tetramoera schistaceana), bean shoot borer (Epinotia aporema), citrus fruit borer (Citripestis sagittiferella), and European grapevine moth (Lobesia botrana);
from the family Gracillariidae, for example, tea leaf roller (Caloptilia theivora) and Asiatic apple leaf miner (Phyllonorycter ringoniella);
from the family Carposinidae, for example, peach fruit moth (Carposina sasakii);
from the family Lyonetiidae, for example, coffee leaf miner (Leucoptera coffeella), peach leaf miner (Lyonetia clerkella), and Lyonetia prunifoliella;
from the family Lymantriidae, for example, Lymantria spp. (such as gypsy moth (Lymantria dispar)) and Euproctis spp. (such as tea lymantriid (Euproctis pseudoconspersa));
from the family Plutellidae, for example, diamondback moth (Plutella xylostella);
from the family Gelechiidae, for example, peach worm (Anarsia lineatella), sweetpotato leaf folder (Helcystogramma triannulella), pink bollworm (Pectinophora gossypiella), potato moth (Phthorimaea operculella), and Tuta absolute;
from the family Arctiidae, for example, American white moth (Hyphantria cunea);
from the family Castniidae, for example, giant sugarcane borer (Telchin licus);
from the family Cossidae, for example, Cossus insularis;
from the family Geometridae, for example, Ascotis selenaria;
from the family Limacodidae, for example, blue-striped nettle grub (Parasa lepida);
from the family Stathmopodidae, for example, persimmon fruit moth (Stathmopoda masinissa);
from the family Sphingidae, for example, tobacco hornworm (Acherontia lachesis);
from the family Sesiidae, for example, Nokona feralis, cherry borer (Synanthedon hector), and Synanthedon tenuis:

from the family Hesperiidae, for example, rice skipper (Parnara guttata);
from the family Tineidae, for example, casemaking clothes moth (Tinea translucens) and common clothes moth (Tineola bisselliella);

and the others.

Thysanoptera:

from the family Thripidae, for example, western flower thrips (Frankliniella occidentalis), oriental thrips (Thrips palmi), yellow tea thrips (Scirtothrips dorsalis), onion thrips (Thrips tabaci), eastern flower thrips (Frankliniella intonsa), rice thrips (Stenchaetothrips biformis), Echinothrips americanus, and avocado thrips (Scirtothrips perseae);
from the family Phlaeothripidae, for example, aculeated rice thrips (Haplothrips aculeatus);

and the others.
Diptera:

from the family Anthomyiidae, for example, seedcorn maggot (Delia platura), onion maggot (Delia antiqua), and beet leaf miner (Pegomya cunicularia);
from the family Ulidiidae, for example, sugarbeet root maggot (Tetanops myopaeformis);

from the family Agromyzidae, for example, rice leaf miner (Agromyza oryzae), tomato leaf miner (Liriomyza sativae), chrysanthemum leaf miner (Liriomyza trifolii), and pea leafminer (Chromatomyia horticola);
from the family Chloropidae, for example, rice stem maggot (Chlorops oryzae);
from the family Tephritidae, for example, melon fly (Bactrocera cucurbitae), oriental fruit fly (Bactrocera dorsalis), Malaysian fruit fly (Bactrocera latifrons), olive fruit fly (Bactrocera oleae), Queensland fruit fly (Bactrocera tryoni), Mediterranean fruit fly (Ceratitis capitata), apple maggot (Rhagoletis pomonella), and Japanese cherry fruit fly (Rhacochlaena japonica);
from the family Ephydridae, for example, smaller rice leaf miner (Hydrellia griseola), whorl maggot (Hydrellia philippina), and paddy stem maggot (Hydrellia sasakii);
from the family Drosophilidae, for example, cherry drosophila (Drosophila suzukii), and common fruit fly (Drosophila melanogaster);
from the family Phoridae, for example, Megaselia spiracularis;
from the family Psychodidae, for example, Clogmia albipunctata;
from the family Sciaridae, for example, Bradysia difformis;
from the family Cecidomyiidae, for example, hessian fly (Mayetiola destructor) and paddy gall fly (Orseolia oryzae);
from the family Diopsidae, for example, Diopsis macrophthalma;
from the family Glossinidae, for example, Glossina palpalis and Glossina morsitans;
from the family Simuliidae, for example, Simulium japonicum and Simulium damnosum;
from the subfamily Phlebotominae;
from the family Tipulidae, for example, rice crane fly (Tipula aino), common cranefly (Tipula oleracea), and European cranefly (Tipula paludosa);
from the family Culicidae, for example, southern house mosquito (Culex pipiens pallens), Culex tritaeniorhynchus, Culex pipiens f. molestus, brown house mosquito (Culex quinquefasciatus), northern house mosquito (Culex pipiens pipiens), Culex vishnui, Asian tiger mosquito (Aedes albopictus), dengue mosquito (Aedes aegypti), Chinese malaria mosquito (Anopheles sinensis), Anopheles gambiae, Anopheles stephensi, Anopheles coluzzii, Anopheles albimanus, Anopheles sundaicus, Anopheles arabiensis, Anopheles funestus, Anopheles darlingi, Anopheles farauti, and Anopheles minimus;
from the family Simulidae, for example, Prosimulium yezoensis and Simulium ornatum;
from the family Tabanidae, for example, Tabanus trigonus;
from the family Muscidae, for example, house fly (Musca domestica), false stable fly (Muscina stabulans), biting house fly (Stomoxys calcitrans), and buffalo fly (Haematobia irritans);
from the family Calliphoridae;
from the family Sarcophagidae;
from the family Chironomidae, for example, Chironomus plumosus, Chironomus yoshimatsui, and Glyptotendipes tokunagai;
from the family Fannidae;

and the others.
Coleoptera:

from the family Chrysomelidae, for example, Diabrotica spp. (such as western corn rootworm (Diabrotica virgifera virgifera), southern corn rootworm (Diabrotica undecimpunctata howardi), northern corn rootworm (Diabrotica barberi), Mexican corn rootworm (Diabrotica virgifera zeae), banded cucumber beetle (Diabrotica balteata), and cucurbit beetle (Diabrotica speciosa)), bean leaf beetle (Cerotoma trifurcata), barley leaf beetle (Oulema melanopus), cucurbit leaf beetle (Aulacophora femoralis), striped flea beetle (Phyllotreta striolata), cabbage flea beetle (Phyllotreta cruciferae), western black flea beetle (Phyllotreta pusilla), cabbage stem flea beetle (Psylliodes chrysocephala), hop flea beetle (Psylliodes punctulata), Colorado potato beetle (Leptinotarsa decemlineata), rice leaf beetle (Oulema oryzae), grape colaspis (Colaspis brunnea), corn flea beetle (Chaetocnema pulicaria), sweet-potato flea beetle (Chaetocnema confinis), potato flea beetle (Epitrix cucumeris), rice leaf beetle (Dicladispa armigera), southern corn leaf beetle (Myochrous denticollis), Laccoptera quadrimaculata, and tobacco flea beetle (Epitrix hirtipennis);
from the family Carabidae, for example, Seedcorn beetle (Stenolophus lecontei) and slender seed-corn ground beetle (Clivina impressifrons);
from the family Scarabaeidae, for example, cupreus chafer (Anomala cuprea), soybean beetle (Anomala rufocuprea), Anomala albopilosa, Japanese beetle (Popillia japonica), yellowish elongate chafer (Heptophylla picea), European Chafer (Rhizotrogus majalis), Tomarus gibbosus, Holotrichia spp., Phyllophaga spp. (such as June beetle (Phyllophaga crinita)), and Diloboderus spp. (such as Diloboderus abderus);

from the family Anthriibidae, for example, coffee bean weevil (Araecerus coffeae);
from the family Aponidae, for example, sweet-potato weevil (Cylas formicarius);
from the family Bruchidae, for example, Mexican bean weevil (Zabrotes subfasciatus);
from the family Scolytidae, for example, pine beetle (Tomicus piniperda) and coffee berry borer (Hypothenemus hampei);
from the family Curculionidae, for example, West Indian sweet-potato weevil (Euscepes postfasciatus), alfalfa weevil (Hypera postica), maize wevil (Sitophilus zeamais), rice weevil (Sitophilus oryzae), grain weevil (Sitophilus granarius), rice plant weevil (Echinocnemus squameus), rice water weevil (Lissorhoptrus oryzophilus), Rhabdoscelus lineaticollis, boll weevil (Anthonomus grandis), nunting billbug (Sphenophorus venatus), southern corn billbug (Sphenophorus callosus), soybean stalk weevil (Sternechus subsignatus), sugarcane weevil (Sphenophorus levis), rusty gourd-shaped weevil (Scepticus griseus), brown gourd-shaped weevil (Scepticus uniformis), Aracanthus spp. (such as Aracanthus mourei), and cotton root borer (Eutinobothrus brasiliensis);
from the family Tenebrionidae, for example, red meal beetle (Tribolium castaneum), mason beetle (Tribolium confusum), and lesser mealworm (Alphitobius diaperinus);
from the family Coccinellidae, for example, twenty-eight-spotted ladybird (Epilachna vigintioctopunctata);
from the family Bostrychidae, for example, common powder-post beetle (Lyctus brunneus) and lesser grain borer (Rhizopertha dominica);
from the family Ptinidae;
from the family Cerambycidae, for example, citrus long-horned beetle (Anoplophora malasiaca), Migdolus fryanus, and peach borer (Aromia bungii);
from the family Elateridae, for example, Melanotus okinawensis, barley wireworm (Agriotes fuscicollis), Melanotus legatus, Anchastus spp., Conoderus spp., Ctenicera spp., Limonius spp., and Aeolus spp.;
from the family Staphylinidae, for example, Paederus fuscipes;
from the family Dermestidae, for example, varied carpet beetle (Anthrenus verbasci), hide beetle (Dermestes maculates), and khapra beetle (Trogoderma granarium);
from the family Anobiidae, for example, tobacco beetle (Lasioderma serricorne) and biscuit beetle (Stegobium paniceum) ;
from the family Laemophloeidae, for example, flat grain beetle (Cryptolestes ferrugineus);
from the family Silvanidae, for example, saw-toothed grain beetle (Oryzaephilus surinamensis);
from the family Nitidulidae, for example, blossom beetle (Brassicogethes aeneus);

and the others.
Orthoptera:

from the family Acrididae, for example, oriental migratory locust (Locusta migratoria), Moroccan locust (Dociostaurus maroccanus), Australian plague locust (Chortoicetes terminifera), red locust (Nomadacris septemfasciata), brown locust (Locustana pardalina), tree locust (Anacridium melanorhodon), Italian locust (Calliptamus italicus), differential grasshopper (Melanoplus differentialis), two-striped grasshopper (Melanoplus bivittatus), migratory grasshopper (Melanoplus sanguinipes), red-legged grasshopper (Melanoplus femurrubrum), clear-winged grasshopper (Camnula pellucida), desert locust (Schistocerca gregaria), Yellow-winged locust (Gastrimargus musicus), spur-throated locust (Austracris guttulosa), Japanese grasshopper (Oxya yezoensis), rice grasshopper (Oxya japonica), and Bombay locust (Patanga succincta) ;
from the family Gryllotalpidae, for example, oriental mole cricket (Gryllotalpa orientalis);
from the family Gryllidae, for example, house cricket (Acheta domestica) and emma field cricket (Teleogryllus emma) ;
from the family Tettigoniidae, for example, mormon cricket (Anabrus simplex);

and the others.
Hymenoptera:

from the family Tenthredinidae, for example, beet sawfly (Athalia rosae) and nippon cabbage sawfly (Athalia japonica);
from the family Formicidae, for example, Solenopsis spp. (such as red imported fire ant (Solenopsis invicta) and tropical fire ant (Solenopsis geminata)), Atta spp. (such as brown leaf-cutting ant (Atta capiguara)), Acromyrmex spp., Paraponera clavata, black house ant (Ochetellus glaber), little red ant (Monomorium pharaonis), Argentine ant (Linepithema humile), Formica japonica, Pristomyrmex punctutus, Pheidole noda, big-headed ant (Pheidole megacephala), Camponotus spp. (such as Camponotus japonicus and Camponotus obscuripes), Pogonomyrmex spp. (such as western harvester ant (Pogonomyrmex occidentalis)), Wasmania spp. (such as

Wasmania auropunctata), and long-legged ant (Anoplolepis gracilipes) ;
from the family Vespidae, for example, Asian giant hornet (Vespa mandarinia), Vespa simillima, Vespa analis, Asian hornet (Vespa velutina), and Polistes jokahamae;
from the family Siricidae, for example, pine wood wasp (Urocerus gigas);
from the family Bethylidae;

and the others.
Blattodea:

from the family Ectobiidae, for example, German cockroach (Blattella germanica);
from the family Blattidae, for example, smoky-brown cockroach (Periplaneta fuliginosa), American cockroach (Periplaneta americana), Australian cockroach (Periplaneta australasiae), brown cockroach (Periplaneta brunnea), and black cockroach (Blatta orientalis);
from the family Termitidae, for example, Japanese termite (Reticulitermes speratus), Formosan termite (Coptotermes formosanus), western drywood termite (Incisitermes minor), Cryptotermes domesticus, Odontotermes formosanus, Neotermes koshunensis, Glyptotermes satsumensis, Glyptotermes nakajimai, Glyptotermes fuscus, Hodotermopsis sjostedti, Coptotermes guangzhouensis, Reticulitermes amamianus, Reticulitermes miyatakei, Reticulitermes kanmonensis, Nasutitermes takasagoensis, Pericapritermes nitobei, Sinocapritermes mushae, and Cornitermes cumulans;

and the others.
Siphonaptera:

from the family Pulicidae, for example, human flea (Pulex irritans), cat flea (Ctenocephalides felis), dog flea (Ctenocephalides canis), oriental rat flea (Xenopsylla cheopis), and chicken flea (Echidnophaga gallinacea);
from the family Hectopsyllidae, for example, chigoe flea (Tunga penetrans);
from the family Ceratophyllidae, for example, European rat flea (Nosopsyllus fasciatus);

and the others.
Psocodae:

from the family Pediculidae, for example, head louse (Pediculus humanus capitis);
from the family Pthiridae, for example, crab louse (Pthirus pubis);
from the family Haematopinidae, for example, short-nosed cattle louse (Haematopinus eurysternus) and pig louse (Haematopinus suis);
from the family Linognathidae, for example, blue cattle louse (Linognathus vituli), sheep face louse (Linognathus ovillus), and capillate louse (Solenopotes capillatus);
from the family Bovicoliidae, for example, cattle biting louse (Bovicola bovis), sheep biting louse (Bovicola ovis), Bovicola breviceps, Damalinia forficula, and Werneckiella spp.;
from the family.Trichodectidae, for example, dog biting louse (Trichodectes canis) and cat louse (Felicola subrostratus);
from the family Menoponidae, for example, common chicken louse (Menopon gallinae), chicken body louse (Menacanthus stramineus), and Trinoton spp.;
from the family Trimenoponidae, for example, Cummingsia spp.;
from the family Trogiidae, for example, death watch (Trogium pulsatorium);
from the family Liposcelidae or Liposcelididae, for example, book louse (Liposcelis corrodens), Liposcelis bostrychophila, Liposcelis pearmani, and Liposcelis entomophila;

and the other.
Thysanura:
from the family Lepismatidae, for example, oriental silverfish (Ctenolepisma villosa) and moth fish (Lepisma saccharina);
and the others.
Acari:

from the family Tetranychidae, for example, common red spider mite (Tetranychus urticae), kanzawa spider mite (Tetranychus kanzawai), red spider mite (Tetranychus evansi), citrus red mite (Panonychus citri), fruit-tree red spider mite (Panonychus ulmi), and Oligonychus spp.;

from the family Eriophyidae, for example, Japanese citrus rust mite (Aculops pelekassi), Phyllocoptruta citri, tomato mite (Aculops lycopersici), purple mite (Calacarus carinatus), tea rust mite (Acaphylla theavagrans), Eriophyes chibaensis, apple bud mite (Aculus schlechtendali), Aceria diospyri, Aceria tosichella, and Shevtchenkella sp.;
from the family Tarsonemidae, for example, broad mite (Polyphagotarsonemus latus);
from the family Tenuipalpidae, for example, Brevipalpus phoenicis;
from the family Tuckerellidae;
from the family Ixodidae, for example, Haemaphysalis longicornis, Haemaphysalis flava, Haemaphysalis japonica, Haemaphysalis campanulata, American dog tick (Dermacentor variabilis), Dermacentor taiwanensis, Rocky Mountain wood tick (Dermacentor andersoni), netted tick (Dermacentor reticulatus), Ixodes ovatus, Ixodes persulcatus, black-legged tick (Ixodes scapularis), Ixodes pacificus, Ixodes holocyclus, Ixodes ricinus, lone star tick (Amblyomma americanum), gulf coast tick (Amblyomma maculatum), Rhipicephalus microplus, cattle tick (Rhipicephalus annulatus), brown dog tick (Rhipicephalus sanguineus), Rhipicephalus appendiculatus, and Rhipicephalus decoloratus;
from the family Argasidae, for example, fowl tick (Argas persicus), Ornithodoros hermsi, and Ornithodoros turicata;
from the family Acaridae, for example, cereal mite (Tyrophagus putrescentiae) and grassland mite (Tyrophagus similis) ;
from the family Pyroglyphidae, for example, American house dust mite (Dermatophagoides farinae) and European house dust mite (Dermatophagoides pteronyssinus);
from the family Cheyletidae, for example, Cheyletus eruditus, Cheyletus malaccensis, Chelacaropsis moorei, and Cheyletiella yasguri;
from the family Psoroptidae, for example, sheep scab mite (Psoroptes ovis), horse psoroptic mange mite (Psoroptes equi), Knemidocoptes mutans, ear mange mite (Otodectes cynotis), and Chorioptes spp.;
from the family Sarcoptidae, for example, Notoedres cati, Notoedres muris, and itch mite (Sarcoptes scabiei);
from the familyListrophoridae, for example, Listrophorus gibbus;
from the family Dermanyssidae, for example, bird mite (Dermanyssus gallinae);
from the family Macronyssidae, for example, feather mite (Ornithonyssus sylviarum) and tropical rat mite (Ornithonyssus bacoti);
from the family Varroidae, for example, Varroa jacobsoni;
from the family Demodicidae, for example, dog follicle mite (Demodex canis) and cat follicle mite (Demodex cati);
from the family Trombiculidae, for example, Leptotrombidium akamushi, Leptotrombidium pallidum, and Leptotrombidium scutellare;

and the others.
Araneae:

from the family Eutichuridae, for example, Cheiracanthium japonicum;
from the family Theridiidae, for example, red-back spider (Latrodectus hasseltii);

and the others
Polydesmida:
from the family Paradoxosomatidae, for example, flat-backed millipede (Oxidus gracilis) and Nedyopus tambanus;
and the others.
Isopoda:
from the family Armadillidiidae, for example, common pill bug (Armadillidium vulgare);
and the others.
Chilopoda:

from the family Scutigeridae, for example, Thereuonema hilgendorfi;
from the family Scolopendridae, for example, giant tropical centipede (Scolopendra subspinipes);
from the family Ethopolyidae, for example, Bothropolys rugosus;

and the others.
Nematoda:

from the family Aphelenchoididae, for example, rice white-tip nematode (Aphelenchoides besseyi);
from the family Pratylenchidae, for example, root lesion nematode (Pratylenchus.coffeae), Pratylenchus brachyurus, California meadow nematode (Pratylenchus neglectus), and Radopholus similis;
from the family Heteroderidae, for example, javanese root-knot nematode (Meloidogyne javanica), southern root-knot nematode (Meloidogyne incognita), guava root-knot nematodes (Meloidogyne enterolobii), northern root-knot nematode (Meloidogyne hapla), soybean cyst nematode (Heterodera glycines), potato cyst nematode (Globodera rostochiensis), and white potato cyst nematode (Globodera pallida);
from the family Hoplolaimidae, for example, Rotylenchulus reniformis;
from the family Anguinidae, for example, strawberry bud nematode (Nothotylenchus acris) and stem nematode (Ditylenchus dipsaci);
from the family Tylenchulidae, for example, citrus nematode (Tylenchulus semipenetrans);
from the family Longidoridae, for example, dagger nematode (Xiphinema index);
from the family Trichodoridae;
from the family Parasitaphelenchidae, for example, pine wilt disease (Bursaphelenchus xylophilus);
from the family Trichuridae, for example, Trichuris suis, Trichuris ovis, and Trichuris discolor;
from the family Capillariidae, for example, Capillaria suis, Calodium hepaticum, Paracapillaria philippinensis, Pearsonema plica, and Pearsibena spp.;
from the family Trichinellidae, for example, Trichinella spiralis and Trichinella britovi;
from the family Strongyloididae, for example, Strongyloides papillosus, Strongyloides planiceps, Strongyloides ransomi, and Strongyloides stercoralis;
from the family Strongylidae, for example, Strongylus edentatus, Strongylus vulgaris, Triodontophorus spp., Oesophagodontus spp., and Cylicostephanus spp.;
from the family Chabertiidae, for example, Oesophagostomum dentatum, Oesophagostomum radiatum, and Chabertia ovina;
from the family Stephanuridae, for example, Stephanurus dentatus;
from the family Dioctophymatidae, for example, Dioctophyme renale;
from the family Ancylostomatidae, for example, Ancylostoma braziliense, Ancylostoma caninum, Ancylostoma duodenale, Uncinaria stenocephala, Bunostomum phlebotomum, Bunostomum trigonocephalum, and Globocephalus spp.;
from the family Syngamidae, for example, Syngamus skrjabinomorpha, Syngamus trachea, and Cyathostoma bronchialis;
from the family Metastrongylidae, for example, Metastrongylus apri;
from the family Dictyocaulidae, for example, Dictyocaulus filaria and Dictyocaulus viviparus;
from the family Crenosomatidae, for example, Crenosoma aerophila and Crenosoma vulpis;
from the family Angiostrongylidae, for example, Angiostrongylus cantonensis, Angiostrongylus vasorum, and Aelurostrongylus abstrusus;
from the family Filaroididae, for example, Filaroides hirthi and Filaroides osleri;
from the family Trichostrongylidae, for example, Trichostrongylus axei, Trichostrongylus colubriformis, and Obeliscoides cuniculi;
from the family Haemonchidae, for example, Haemonchus contortus, Hyostrongylus rubidus, Mecistocirrus digitatus, and Ostertagia ostertagi;
from the family Molineidae, for example, Nematodirus filicollis and Nematodirus spathiger;
from the family Oxyuridae, for example, Enterobius vermicularis, Oxyuris equi, and Passalurus ambiguus;
from the family Heterakidae, for example, Heterakis gallinarum;
from the family Ascarididae, for example, Ascaris lumbricoides, Ascaris suum, and Parascaris equorum;
from the family Toxocaridae, for example, Toxocara canis, Toxocara cati, and Toxocara vitulorum;
from the family Anisakidae, for example, Anisakis spp. ;
from the family Ascaridiidae, for example, Ascaridia galli;
from the family Gnathostomatidae, for example, Gnathostoma doloresi;
from the family Physalopteridae, for example, Physaloptera felidis and Physaloptera rara;
from the family Thelaziidae, for example, Thelazia callipaeda and Thelazia gulosa;
from the family Gongylonematidae, for example, Gongylonema pulchrum;
from the family Habronematidae, for example, Habronema majus, Habronema muscae, and Draschia megastoma;
from the family Dracunculidae, for example, Dracunculus medinensis;
from the family Spirocercidae, for example, Ascarops strongylina;
from the family Filariidae, for example, Stephanofilaria okinawaensis, Parafilaria multipapillosa, and Parafilaria bovicola;
from the family Setariidae, for example, Setaria digitata and Setaria equina;
from the family Onchocercidae, for example, Dirofilaria immitis, Brugia malayi, Onchocerca cervicalis, Onchocerca gibsoni, Dipetalonema reconditum, and Wuchereria bancrofti;

and the others.

The harmful arthropods such as harmful insects and harmful mites, and harmful nematodes may be those having a reduced susceptibility to or a developed resistance to an insecticide, a miticide, or a nematicide.

The method for controlling harmful arthropods or harmful nematodes of the present invention is carried out by applying an effective amount of the Present compound or the Composition A to a harmful arthropod or a harmful nematode directly and/or a habitat thereof (for example, plant bodies, soil, an interior of a house, and animal bodies). Examples of the method for controlling harmful arthropods or harmful nematodes of the present invention include foliage treatment, soil treatment, root treatment, shower treatment, smoking treatment, water surface treatment, and seed treatment.

The Present compound or the Composition A is usually used by mixing it with inert carrier(s) such as solid carrier(s), liquid carrier(s), and gaseous carrier(s), surfactant(s), and the like, and as needed, adding thereto auxiliary agent(s) for formulation such as binder(s), dispersant(s), and stabilizer(s) to be formulated into an aqueous suspension formulation, an oily suspension formulation, an oil solution, an emulsifiable concentrate, an emulsion formulation, a microemulsion formulation, a microcapsule formulation, a wettable powder, a granular wettable powder, a dust formulation, a granule, a tablet, an aerosol formulation, a resin formulation, or the like. In addition to these formulations, the Present compound or the Composition A may be used by formulating it into a dosage form described in Manual on development and use of FAO and WHO Specifications for pesticides, FAO Plant Production and Protection Papers-271-276, prepared by the FAO/WHO Joint Meeting on Pesticide Specifications, 2016, ISSN:0259-2517.

These formulations usually comprise 0.0001 to 99% by weight ratio of the Present compound or the Composition A.

Examples of the solid carrier include fine powders and granules of clays (for example, pyrophyllite clay and kaolin clay), talc, calcium carbonate, diatomaceous earth, zeolite, bentonite, acid white clay, attapulgite, white carbon, ammonium sulfate, vermiculite, perlite, pumice, silica sand, chemical fertilizers (for example, ammonium sulfate, ammonium phosphate, ammonium nitrate, urea, and ammonium chloride), and the others; as well as resins (for example, polyethylene, polypropylene, polyester, polyurethane, polyamide, and polyvinyl chloride).

Examples of the liquid carrier include water, alcohols (for example, ethanol, cyclohexanol, benzyl alcohol, propylene glycol, and polyethylene glycol), ketones (for example, acetone and cyclohexanone), aromatic hydrocarbons (for example, xylene, phenyl xylyl ethane, and methylnaphthalene), aliphatic hydrocarbons (for example, hexane and cyclohexane), esters (for example, ethyl acetate, methyl oleate, and propylene carbonate), nitriles (for example, acetonitrile), ethers (for example, ethylene glycol dimethyl ether), amides (for example, N,N-dimethylformamide and N,N-dimethyloctanamide), sulfoxides (for example, dimethyl sulfoxide), lactams (for example, N-methylpyrrolidone and N-octylpyrrolidone), fatty acids (for example, oleic acid), and vegetable oils (for example, soybean oil).

Examples of the gaseous carrier include fluorocarbon, butane gas, LPG (liquefied petroleum gas), dimethyl ether, nitrogen, and carbon dioxide.

Examples of the surfactant include nonionic surfactants (for example, polyoxyethylene alkyl ethers, polyoxyethylene alkyl aryl ethers, and polyethylene glycol fatty acid esters), and anionic surfactants (for example, alkyl sulfonates, alkyl aryl sulfonates, and alkyl sulfates).

Examples of the other auxiliary agent for formulation include binders, dispersants, colorants, and stabilizers, and the specific examples thereof include polysaccharides (for example, starch, gum arabic, cellulose derivatives, and alginic acid), lignin derivatives, water-soluble synthetic polymers (for example, polyvinyl alcohol, polyvinyl pyrrolidone, and polyacrylic acids), acidic isopropyl phosphate, and dibutylhydroxytoluene.

As used herein, examples of the plant include whole plant, stem and leaf, flower, ear, fruit, tree stem, branch, crown, seed, vegetative reproductive organ, and seedling.

A vegetative reproductive organ means a part of plant such as root, stem, and leaf which has a growth capability even when said part is separated from the plant body and placed into soil. Examples of the vegetative reproductive organ include tuberous root, creeping root, bulb, corm or solid bulb, tuber, rhizome, stolon, rhizophore, cane cuttings, propagule, and vine cutting. Stolon is also referred to as "runner", and propagule is also referred to as "propagulum" and categorized into broad bud and bulbil. Vine cutting means a shoot (collective term of leaf and stem) of sweet potato, glutinous yam, or the like. Bulb, corm or solid bulb, tuber, rhizome, cane cuttings, rhizophore, and tuberous root are also collectively referred to as "bulb". For example, cultivation of potato starts with planting a tuber into soil, and the tuber to be used is generally referred to as "seed potato".

Examples of a method for controlling harmful arthropods or harmful nematodes by applying an effective amount of the Present compound or the Composition A to soils include a method of applying an effective amount of the Present compound or the Composition A to soils before planting plants or after planting plants, a method of applying an effective amount of the Present compound or the Composition A to a root part of a crop to be protected from damage such as ingestion by harmful arthropods or harmful nematodes, and a method of controlling harmful arthropods or harmful

nematodes that ingest a plant by permeating and transferring an effective amount of the Present compound or the Composition A from a root etc. into the interior of the plant body. Specifically, examples of the application method include planting hole treatment (for example, spraying into planting holes, and soil mixing after planting hole treatment), plant foot treatment (for example, plant foot spraying, soil mixing after plant foot treatment, irrigation at plant foot, and plant foot treatment at a later seeding raising stage), planting furrow treatment (for example, planting furrow spraying, and soil mixing after planting furrow treatment), planting row treatment (for example, planting row spraying, soil mixing after planting row treatment, and planting row spraying at a growing stage), planting row treatment at the time of sowing (for example, planting row spraying at the time of sowing, and soil mixing after planting row treatment at the time of sowing), broadcast treatment (for example, overall soil surface spraying, and soil mixing after broadcast treatment), side-article treatment, treatment of water surface (for example, application to water surface, and application to water surface after flooding), other soil spraying treatment (for example, spraying of a granular formulation on leaves at a growing stage, spraying under a canopy or around a tree stem, spraying on the soil surface, mixing with surface soil, spraying into seed holes, spraying on the ground surfaces of furrows, and spraying between plants), other irrigation treatment (for example, soil irrigation, irrigation at a seedling raising stage, chemical solution injection treatment, irrigation of a plant part just above the ground, chemical solution drip irrigation, and chemigation), seedling raising box treatment (for example, spraying into a seedling raising box, irrigation of a seedling raising box, and flooding into a seedling raising box with chemical solution), seedling raising tray treatment (for example, spraying on a seedling raising tray, irrigation of a seedling raising tray, and flooding into a seedling raising tray with chemical solution), seedbed treatment (for example, spraying on a seedbed, irrigation of a seedbed, spraying on a lowland rice nursery, and immersion of seedlings), seedbed soil incorporation treatment (for example, mixing with seedbed soil, mixing with seedbed soil before sowing, spraying at sowing before covering with soils, spraying at sowing after covering with soils, and mixing with covering with soils), and other treatment (for example, mixing with culture soil, plowing under, mixing with surface soil, mixing with soil at the place where raindrops fall from a canopy, treatment at a planting position, spraying of a granule formulation on flower clusters, and mixing with a paste fertilizer).

Examples of the application to seeds (or seed treatments) include an application of the Present compound or the Composition A to seeds or vegetative reproductive organs, and specific examples thereof include spraying treatment in which a suspension of the Present compound or the Composition A is sprayed onto the seed surface or the vegetative reproductive organ surface in the form of mist; smearing treatment in which a surface of the seeds or the vegetative reproductive organs is coated with the Present compound or the Composition A; a soaking treatment in which the seeds or the vegetative reproductive organs are soaked into the solution of the Present compound or the Composition A for a certain time; and a method for coating the seeds or the vegetative reproductive organs with a carrier containing the Present compound or the Composition A (for example, film coating treatment and pellet coating treatment). Examples of the above-described vegetative reproductive organ include particularly seed potato.

When the Composition A is applied to seeds or vegetative reproductive organs, the Composition A may be also applied to seeds or vegetative reproductive organs as a single formulation, or the Composition A may be applied to seeds or vegetative reproductive organs as multiple different formulations by multiple times. Examples of the method in which the Composition A is applied as multiple different formulations by multiple times include a method in which the formulations comprising as an active component the Present compound only are applied, and seeds or vegetative reproductive organs are air dried, followed by applying the formulations comprising the Present ingredient(s): and a method in which the formulations comprising as active components the Present compound and the Present ingredient(s) are applied, and seeds or vegetative reproductive organs are air dried, followed by applying the formulations comprising the Present ingredient(s) other than the already-applied Present ingredient(s), are included.

As used herein, seeds or vegetative reproductive organs holding the Present compound or the Composition A mean seeds or vegetative reproductive organs in the state where the Present compound or the Composition A is adhered to a surface of the seeds or the vegetative reproductive organs. The above-described seeds or vegetative reproductive organs holding the Present compound or the Composition A may be adhered by any other materials that are different from the Present compound or the Composition A before or after being adhered by the Present compound or the Composition A to the seeds or vegetative reproductive organs.

Also, when the Composition A is adhered in a form of layer(s) to a surface of seeds or vegetative reproductive organs, the layer(s) is/are composed of one layer or a multiple layers. Also, when multiple layers are formed, each of the layer may be composed of a layer comprising one or more active ingredients, or a combination of a layer comprising one or more active ingredients and a layer not comprising an active ingredient.

Seeds or vegetative reproductive organs holding the Present compound or the Composition A can be obtained, for example, by applying the formulations comprising the Present compound or the Composition A by the above-described seed treatment method to seeds or vegetative reproductive organs.

When the Present compound or the Composition A is . applied for controlling harmful arthropods or harmful nematodes in agricultural fields, the application dose thereof is usually within a range of 1 to 10,000 g of the Present compound per 10,000 $m^2$. In the case of being applied to seeds or vegetative reproductive organs, the application dose

thereof is usually within a range of 0.001 to 100 g of the Present compound per 1 Kg of seeds or vegetative reproductive organs. When the Present compound or the Composition A is formulated into an emulsifiable concentrate, a wettable powder, or a flowable etc., they are usually applied by diluting them with water so as to make a concentration of the active ingredients 0.01 to 10,000 ppm, and the granular formulation or the dust formulation etc. is usually applied as itself without diluting them.

Also, the resin preparation of the Present compound or the Composition A which is processed into a sheet or a string may be applied by winding a crop with the sheet or the string of the resin preparation, putting the string of the resin preparation around a crop so that the crop will be surrounded by the string, or laying the sheet of the resin preparation on the soil surface near the root of a crop, and the like.

When the Present compound or the Composition A is used to control harmful arthropods that live inside a house, the application dose as an amount of the Present compound is usually within a range from 0.01 to 1,000 mg per 1 $m^2$ of an area to be treated, in the case of using it on a planar area. In the case of using it spatially, the application dose as an amount of the Present compound is usually within a range from 0.01 to 500 mg per 1 $m^3$ of the space to be treated. When the Present compound or the Composition A is formulated into emulsifiable concentrates, wettable powders, flowables, or the others, such formulations are usually applied after diluting them with water in such a way that a concentration of the active ingredient is within a range from 0.1 to 10,000 ppm. In the case of being formulated into oil solutions, aerosols, smoking agents, poison baits, and the others, such formulations are used as themselves without diluting them.

When the Present compound or the Composition A is used for controlling harmful arthropods or harmful nematodes that are parasitic in livestock such as cows, horses, pigs, sheep, goats, and chickens, and small animals such as dogs, cats, rats, and mice, the Present compound or the Composition A may be applied to the animals by a known method in the veterinary field. Specific examples of the method of applying the Present compound or the Composition A include a method of orally administering it as a tablet, a capsule, a chewable tablet, or a mixture with feed or the like, a method of administering it by a suppository or an injection (including intramuscular, subcutaneous, intravenous, and intraperitoneal injections), a method of spraying, smearing, or adding dropwise an oil solution, an aqueous solution, a spot-on formulation, a pour-on formulation, a shampoo formulation, a lotion formulation, a paste formulation, or the like, or a method of putting a collar, an ear tag, a bracelet, or clothing made of the resin formulations to an animal. In the case of being administered to an animal body, the dose of the Present compound is usually within a range from 0.1 to 1,000 mg per 1 kg of an animal body weight.

Also, the Present compound or the Composition A may be used as an agent for controlling harmful arthropods or harmful nematodes in agricultural lands such as fields, paddy fields, turfs, and orchards. Examples of the plants include the followings.

corn (dent corn, flint corn, flour corn, popcorn, waxy corn, sweet corn, and field corn), rice (long grain rice, short grain rice, medium grain rice, japonica rice, tropical japonica rice, indica rice, javanica rice, paddy rice, upland rice, floating rice, direct-seeded rice, transplanted rice, and glutinous rice), wheat (bread wheat (hard wheat, soft wheat, medium wheat, red wheat, and white wheat), durum wheat, spelt wheat, and club wheat, winter wheat and spring wheat of them), barley (two-rowed barley (= barley for brewery), six-rowed barley, hull-less barley, and pearl barley, winter barley and spring barley of them), rye (winter rye and spring rye), triticale (winter triticale and spring triticale), oat (winter oat and spring oat), sorghum, cotton (upland cotton and Pima cotton), soybean (ripe seed harvest soybean, green soybeans, and early harvest soybeans, indeterminate type, determinate type, and semi-determinate type of them), peanut, buckwheat, beet (beets for sugar production, beets for feed, beets for root vegetable, beets for leaf vegetable, and beets for fuel), rapeseed (winter rapeseed and spring rapeseed), canola (winter canola and spring canola), sunflower (sunflowers for oil extraction, edible sunflowers, and sunflowers for ornamental purpose), sugar cane, tobacco, tea, mulberry, solanaceous vegetables (for example, eggplant, tomato, pimento, pepper, and potato), cucurbitaceous vegetables (for example, cucumber, pumpkin, zucchini, water melon, and melon), cruciferous vegetables (for example, Japanese radish, white turnip, horseradish, kohlrabi, Chinese cabbage, cabbage, leaf mustard, broccoli, and cauliflower), asteraceous vegetables (for example, burdock, crown daisy, artichoke, and lettuce), liliaceous vegetables (for example, welsh onion, onion, garlic, and asparagus), ammiaceous vegetables (for example, carrot, parsley, celery, and parsnip), chenopodiaceous vegetables (for example, spinach and Swiss chard), lamiaceous vegetables (for example, perilla, mint, and basil), strawberry, sweet potato, glutinous yam, eddoe, pomaceous fruits (for example, apple, pear, Japanese pear, Chinese white pear, Chinese quince, and quince), stone fleshy fruits (for example, peach, plum, nectarine, Japanese apricot (*Prunus mume*), cherry fruit, apricot, and prune), citrus fruits (for example, *Citrus unshiu,* orange, lemon, lime, and grapefruit), nuts (for example, chestnuts, walnuts, hazelnuts, almond, pistachio, cashew nuts, and macadamia nuts), berry fruits (for example, blueberry, cranberry, blackberry, and raspberry), grapes, Japanese persimmon, fig, olive, Japanese plum, banana, coffee, date palm, coconuts, ornamental plants, forest plants, turfs, grasses, and the others.

The above plants are not specifically limited as long as they are generally cultivated cultivars. The above plants also include plants which may be produced by natural breeding, plants which may be generated by mutation, F1 hybrid plants, and genetically modified crops. Examples of the genetically modified crops include plants which have resistance

to HPPD (4-hydroxyphenylpyruvate dioxygenase enzyme) inhibitors such as isoxaflutole, ALS (acetolactate synthase) inhibitors such as imazethapyr and thifensulfuron-methyl, EPSP (5-enolpyruvylshikimate-3-phosphate synthase) inhibitors, glutamine synthetase inhibitors, PPO (protoporphyrinogen oxidase) inhibitors, or herbicide such as bromoxynil and dicamba; plants which can synthesize a selective toxin known in *Bacillus* spp. such as *Bacillus thuringiensis* or the like; and plants which can synthesize a gene fragment or the like which is partially identical to an endogenous gene derived from a harmful insect, and induce a gene silencing (RNAi; RNA interference) in the target harmful insect to achieve a specific insecticidal activity.

EXAMPLES

Hereinafter, the present invention is illustrated more in detail by Preparation Examples, Formulation Examples, Test Examples, and the like, but the present invention is not limited to these Examples only.

The Present compounds 1 to 3 were produced according to the methods for producing norzoanthamine, zoanthamine, and norzoanthaminone described in Reference Example 1 in Examples in JPH10-53589A. The Present compound 4 was produced by isolation according to the method for producing zoanthaminone described in Heterocyclic Communications, 1995, 1(2-3), 207-214.

Preparation Example 1

The Present compound 1 was produced according to Reference Example 1 in Examples in JPH10-53589A. The $^1$H-NMR data of the resulting Present compound 1 is as follows. $^1$H-NMR ($CDCl_3$) $\delta$ (ppm): 0.91 (3H, d, J = 6.6 Hz), 1.01 (6H, s), 1.09 (1H, dd, J = 13 Hz, 12 Hz), 1.16 (3H, s), 1.43-1.60 (3H, m), 1.66-1.79 (2H, m), 1.88-1.92 (1H, m), 1.92 (1H, d, J = 14 Hz), 2.02 (3H, s), 2.09 (1H, dd, J = 13 Hz, 4.7 Hz), 2.16 (1H, d, J = 14 Hz), 2.19-2.25 (4H, m), 2.37 (1H, d, J = 20 Hz), 2.51 (1H, dd, J = 14 Hz, 12 Hz), 2.64-2.72 (2H, m), 2.84 (1H, s), 3.23 (1H, t, J = 6.1 Hz), 3.28 (1H, d, J = 6.1 Hz), 3.67 (1H, d, J = 20 Hz), 4.55-4.56 (1H, m), 5.92 (1H, s).

Preparation Example 2

The Present compound 2 was produced according to Reference Example 1 in Examples in JPH10-53589A. The $^1$H-NMR data of the resulting Present compound 2 is as follows. $^1$H-NMR ($CDCl_3$) $\delta$ (ppm): 0.92 (3H, d, J = 6.4 Hz), 0.98 (3H, s), 1.00 (3H, s), 1.10 (1H, dd, J = 13 Hz, 12 Hz), 1.17 (3H, d, J = 6.9 Hz), 1.20 (3H, s), 1.47-1.59 (3H, m), 1.66-1.81 (2H, m), 1.87-1.91 (1H, m), 1.92 (1H, d, J = 14 Hz), 2.01 (3H, s), 2.10 (1H, dd, J = 13 Hz, 4.9 Hz), 2.17 (1H, d, J = 14 Hz), 2.17-2.30 (3H, m), 2.37 (1H, d, J = 20 Hz), 2.38-2.46 (1H, m), 2.66 (1H, dd, J = 13 Hz, 5.5 Hz), 2.99-3.04 (1H, m), 3.22 (1H, s), 3.25 (1H, d, J = 6.9 Hz), 3.29 (1H, d, J = 6.9 Hz), 3.67 (1H, d, J = 20 Hz), 4.54-4.57 (1H, m), 5.92 (1H, s).

Preparation Example 3

The Present compound 3 was produced according to Reference Example 1 in Examples in JPH10-53589A. The $^1$H-NMR data of the resulting Present compound 3 is as follows. $^1$H-NMR ($CDCl_3$) $\delta$ (ppm): 0.90 (3H, d, J = 6.4 Hz), 1.02 (3H, s), 1.07 (3H, s), 1.11 (1H, d, J = 12 Hz), 1.28 (3H, s), 1.41-1.48 (1H, m), 1.53-1.61 (2H, m), 1.76-1.88 (3H, m), 1.97 (1H, dd, J = 12 Hz, 5.2 Hz), 2.03 (3H, s), 2.21-2.32 (2H, m), 2.49-2.76 (4H, m), 2.55 (1H, d, J = 21 Hz), 2.97 (1H, s), 3.03 (1H, d, J = 8.4 Hz), 3.36 (1H, dd, J = 18 Hz, 3.4 Hz), 3.99 (1H, dd, J = 8.4 Hz, 6.8 Hz), 4.13 (1H, d, J = 21 Hz), 4.53 (1H, d, J = 6.8 Hz), 5.91 (1H, s).

Preparation Example 4

The Present compound 4 was produced according to the method for producing zoanthaminone described in Heterocyclic Communications, 1995, 1(2-3), 207-214. The $^1$H-NMR data of the resulting Present compound 4 is as follows. $^1$H-NMR ($CDCl_3$) $\delta$ (ppm): 0.90 (3H, d, J = 6.6 Hz), 0.99 (3H, s), 1.02-1.07 (1H, m), 1.10 (3H, s), 1.17 (3H, d, J = 6.8 Hz), 1.25 (3H, s), 1.45-1.89 (6H, m), 2.00 (1H, dd, J = 14 Hz, 4.8 Hz), 2.03 (3H, s), 2.14 (1H, dd, J = 18 Hz, 11 Hz), 2.26-2.32 (1H, m), 2.55 (1H, d, J = 20 Hz), 2.61 (1H, dd, J = 14 Hz, 5.4 Hz), 2.82 (1H, ddd, J = 14 Hz, 11 Hz, 3.9 Hz), 2.98-3.03 (2H, m), 3.27 (1H, dd, J = 18 Hz, 3.9 Hz), 3.36 (1H, s), 4.01 (1H, dd, J = 8.0 Hz, 7.0 Hz), 4.11 (1H, d, J = 20 Hz), 4.53 (1H, d, J = 7.0 Hz), 5.90 (1H, s).

Preparation Example 5

The Present compound 5 was produced according to Reference Example 2 in Examples in JPH10-53589A. The $^1$H-NMR data of the resulting Present compound 5 is as follows. $^1$H-NMR ($CD_3OD$) $\delta$ (ppm): 1.02 (3H, s), 1.03 (3H,

d, J = 7.4 Hz), 1.36 (3H, s), 1.49 (3H, s), 1.49 (1H, t, J = 13 Hz), 1.64-1.71 (1H, m), 1.82 (1H, d, J = 15 Hz), 1.90-1.99 (3H, m), 2.03 (1H, d, J = 15 Hz), 2.07 (3H, s), 2.32 (1H, d, J = 14 Hz), 2.47-2.76 (8H, m), 2.92 (1H, d, J = 16 Hz), 3.16 (1H, d, J = 16 Hz), 3.33 (1H, d, J = 15 Hz), 3.34 (1H, s), 4.26 (1H, dd, J = 13 Hz, 6.5 Hz), 4.38 (1H, d, J = 13 Hz), 4.95-4.97 (1H, m), 5.93 (1H, s).

Preparation Example 6

The Present compound 6 was produced as follows.

To a solution of zoanthamine (25.5 mg) in methanol (2.5 mL) were added 15 drops of 1.2N hydrochloric acid, and the resulting mixture was stirred at room temperature for 1 hour. The resulting solution was concentrated under reduced pressure to give the Present compound 6 (28.5 mg). The $^1$H-NMR data of the resulting Present compound 6 is as follows.

$^1$H-NMR ($CD_3OD$) $\delta$ (ppm): 1.01 (3H, s), 1.04 (3H, d, J = 6.3 Hz), 1.20 (3H, d, J = 7.0 Hz), 1.34 (3H, s), 1.53 (3H, s), 1.47-1.54 (1H, m), 1.68 (1H, ddd, J = 14 Hz, 12 Hz, 2.3 Hz), 1.84 (1H, dd, J = 15 Hz, 3.5 Hz), 1.81-2.03 (3H, m), 1.98 (1H, d, J = 15 Hz), 2.07 (3H, s), 2.33 (1H, dt, J = 14 Hz, 3.5 Hz), 2.43-2.46 (2H, m), 2.54-2.61 (2H, m), 2.73 (1H, dd, J = 14 Hz, 5.3 Hz), 2.90-2.97 (2H, m), 3.05 (1H, dq, J = 7.0 Hz, 5.3 Hz), 3.20 (1H, d, J = 15 Hz), 3.36 (1H, s), 3.39 (1H, d, J = 15 Hz), 4.29 (1H, dd, J = 13 Hz, 6.2 Hz), 4.38 (1H, d, J = 13 Hz), 4.96-4.97 (1H, m), 5.94 (1H, s).

Next, Formulation Examples of the Present compound are shown below. The "part(s)" represents "part(s) by weight". Also, the expression of "Present compound S" represents the compounds described in the Present compound 1 to the Present compound 40.

Formulation Example 1

A mixture of polyoxyethylene alkyl ether sulfate ammonium salt and silica (weight ratio of 1 : 1) (35 parts), any one of the Present compound S (10 parts), and water (55 parts) are mixed, and the resulting mixture is subjected to fine grinding according to a wet grinding method to obtain each formulation.

Formulation Example 2

Any one of the Present compound S (50 parts), calcium lignin sulfonate (3 parts), sodium lauryl sulfate (2 parts), and silica (45 parts) are ground and mixed to obtain each formulation.

Formulation Example 3

Any one of the Present compound S (5 parts), polyoxyethylene styryl phenyl ether (9 parts), polyoxyethylene decyl ether (number of added ethyleneoxide: 5) (5 parts), calcium dodecylbenzene sulfonate (6 parts), and xylene (75 parts) are mixed to obtain each formulation.

Formulation Example 4

Any one of the Present compound S (2 parts), silica (1 part), calcium lignin sulfonate (2 parts), bentonite (30 parts), and kaolin clay (65 parts) are ground and mixed, an appropriate amount of water is added thereto, the resulting mixture is kneaded, subjected to granulation with a granulator, and then dried to obtain each formulation.

Formulation Example 5

Any one of the Present compound S (10 parts), and a mixture of benzyl alcohol (18 parts) and DMSO (9 parts) are mixed, GERONOL (registered trademark) TE250 (6.3 parts), Ethylan (registered trademark) NS-500LQ (2.7 parts), and solvent naphtha (54 parts) are added thereto, and the resulting mixture is mixed to obtain each formulation.

Formulation Example 6

Any one of the Present compound S (0.1 part) is mixed with kerosene (39.9 parts) and dissolved therein, the resulting solution is placed into an aerosol container, and the container is filled with liquefied petroleum gas (a mixture of propane, butane, and isobutane; saturated vapor pressure: 0.47 MPa (25°C)) (60 parts) to obtain each formulation.

Formulation Example 7

Any one of the Present compound S (0.2 part), lees powder extracted from pyrethrum (50 parts), Tabu powder (30 parts), and wood powder (19.8 parts) are mixed, an appropriate amount of water is added thereto, the resulting mixture is kneaded, then subjected to an extruder to obtain a plate sheet, and the plate sheet is subjected to a punching machine to be converted into a spiral shape to obtain each formulation.

Next, Test Examples are used to show efficacy of the Present compounds on controlling harmful arthropods and harmful nematodes.. The following Test Examples were carried out at 25°C. Also, the "untreated group" represents a group where the similar treatment procedure to that of the treated group except not using the test compound is done.

Test Method 1

Test compound is made to a formulation according to a similar method to that described in the Formulation Example 5, and thereto is added water containing 0.03 v/v % of Shindain (registered trademark) to prepare a diluted solution containing a prescribed concentration of the test compound.

Cabbage (*Brassicae oleracea*) seedling (on the developmental stage of the third to fourth true leaf) is planted in a container, and the diluted solutions are sprayed to the seedling at a ratio of 20 mL/seedling. Thereafter, 10 of third-instar larvae of cotton worm (*Spodoptera litura*) are released. After 6 days, the number of the surviving insects is counted, and the mortality of insects is calculated by the following equation.

$$\text{Mortality (\%)} = (1 - \text{Number of surviving insects} / 10) \times 100$$

Test Example 1-1

The test was conducted by making the prescribed concentration 200 ppm and using each of the below-mentioned Present compounds as a test compound according to the Test Method 1. As a result of the test, the below-mentioned Present compounds showed 100% as the mortality.

Present compounds: 1, 2, 5, and 6

Test Method 2

Test compound is made to a formulation according to a similar method to that described in the Formulation Example 5, and thereto is added water containing 0.03 v/v % of Shindain (registered trademark) to prepare a diluted solution containing a prescribed concentration of the test compound.

Cabbage (*Brassicae oleracea*) seedling (on the developmental stage of the third to fourth true leaf) is planted in a container, and the diluted solutions are sprayed to the seedling at a ratio of 20 mL/seedling. Thereafter, 10 of third-instar larvae of diamondback moth (*Plutella xylostella*) are released to the container. After 6 days, the number of the surviving insects is counted, and the mortality of insects is calculated by the following equation.

$$\text{Mortality (\%)} = (1 - \text{Number of surviving insects} / 10) \times 100$$

Test Example 2-1

The test was conducted by making the prescribed concentration 200 ppm and using each of the below-mentioned Present compounds as a test compound according to the Test Method 2. As a result of the test, the below-mentioned Present compounds showed 100% as the mortality.

Present compounds: 1, 2, 5, and 6

Test Example 2-2

The test was conducted by making the prescribed concentration 500 ppm and using the below-mentioned Present compound as a test compound according to the Test Method 2 except for formulating it according to the Formulation Example 1 instead of the Formulation Example 5. As a result of the test, the below-mentioned Present compound showed 80% as the mortality.

Present compound: 4

Test Method 3

Test compound is made to a formulation according to a similar method to that described in the Formulation Example 5, and thereto is added water containing 0.03 v/v % of Shindain (registered trademark) to prepare a diluted solution containing a prescribed concentration of the test compound.

Cucumber (*Cucumis sativus*) seedling (on the developmental stage of the second true leaf) is planted in a container and approximately 30 cotton aphids (*Aphis gossypii*) (all developmental stages of life) are released onto the seedling. After 1 day, the diluted solutions are sprayed to the seedling at a ratio of 10 mL/seedling. Further, after 5 days, the number of the surviving insects is examined and the controlling value is calculated by the following equation.

$$\text{Controlling value (\%)} = \{1 - (Cb \times Tai) / (Cai \times Tb)\} \times 100$$

wherein the symbols in the formula represent the following descriptions.

Cb: Number of the test insects in untreated group;
Cai: Number of the surviving insects at the time of the investigation in untreated group;
Tb: Number of the test insects in treated group;
Tai: Number of the surviving insects at the time of the investigation in treated group

Test Example 3-1

The test was conducted by making the prescribed concentration 200 ppm and using each of the below-mentioned Present compounds as a test compound according to the Test Method 3. As a result of the test, the below-mentioned Present compounds showed 90% or greater as the controlling value.

Present compounds: 1, 2, 5, and 6

Test Method 4

Test compound is made to a formulation according to a similar method to that described in the Formulation Example 5, and thereto is added water to prepare a diluted solution containing a prescribed concentration of the test compound.

Cucumber seedling (on the developmental stage of the second true leaf) is planted in a container, and the diluted solutions are drenched to the bottom of the seedling at a ratio of 5 mL/seedling. After 7 days, approximately 30 cotton aphids (*Aphis gossypii*) (all developmental stages of life) are released onto the leaf of the seedling. Further, after 6 days, the number of the surviving insects is examined and the controlling value is calculated by the following equation.

$$\text{Controlling value (\%)} = \{1 - (Cb \times Tai) / (Cai \times Tb)\} \times 100$$

wherein the symbols in the formula represent the following descriptions.

Cb: Number of the test insects in untreated group;
Cai: Number of the surviving insects at the time of the investigation in untreated group;
Tb: Number of the test insects in treated group;
Tai: Number of the surviving insects at the time of the investigation in treated group

Test Example 4-1

The test was conducted by making the prescribed concentration 200 ppm and using each of the below-mentioned Present compounds as a test compound according to the Test Method 4. As a result of the test, the below-mentioned Present compounds showed 90% or greater as the controlling value.

Present compounds: 1, 2, 5, and 6

Test Method 5

The test compound is made to a formulation according to a similar method to that described in the Formulation Example 5, and thereto is added water containing 0.03 v/v % of Shindain (registered trademark) to prepare a diluted solution containing a prescribed concentration of the test compound.
Rice (*Oryza sativa*) seedling (on the developmental stage of the second true leaf) is planted in a container, and the diluted solutions are sprayed to the seedling at a ratio of 10 mL/seedling. Thereafter, 20 of third-instar larvae of brown planthoppers (*Nilaparvata lugens*) are released onto the rice seedling. After 6 days, the number of the surviving insects is examined and the mortality of insects is calculated by the following equation.

$$\text{Mortality (\%)} = \{1- \text{Number of surviving insects} / 20\} \times 100$$

Test Example 5-1

The test was conducted by making the prescribed concentration 200 ppm and using each of the below-mentioned Present compounds as a test compound according to the Test Method 5. As a result of the test, the below-mentioned Present compounds showed 100% as the mortality.

Present compounds: 1, 2, 5, and 6

Test Method 6

The test compound is made to a formulation according to a similar method to that described in the Formulation Example 5, and thereto is added water to prepare a diluted solution containing a prescribed concentration of the test compound.
Five mL of the diluted solution described above is added to a container, and therein is installed rice (Oryza *sativa*) seedling (on the developmental stage of the second true leaf) that is planted in a container having a hole at the bottom. After 7 days, 20 of third-instar larvae of brown planthoppers (*Nilaparvata lugens*) are released. Further, after 6 days, the number of the surviving insects is examined and the mortality of insects is calculated by the following equation.

$$\text{Mortality (\%)} = \{1- \text{Number of surviving insects} / 20\} \times 100$$

Test Example 6-1

The test was conducted by making the prescribed concentration 200 ppm and using each of the below-mentioned Present compounds as a test compound according to the Test Method 6. As a result of the test, the below-mentioned Present compounds showed 90% or greater as the mortality. Present compounds: 1, 2, 5, and 6

Test Method 7

The test compound is made to a formulation according to a similar method to that described in the Formulation Example 5, and thereto is added water containing 0.03 v/v % of Shindain (registered trademark) to prepare a diluted solution containing a prescribed concentration of the test compound.

Cabbage (*Brassicae oleracea*) seedling (on the developmental stage of the second true leaf) is planted in a container, and the diluted solutions are sprayed to the seedling at a ratio of 10 mL/seedling. Thereafter, the second true leaf is cut and installed in the container, and approximately 20 nymphs of Western flower thrips (*Frankliniella occidentalis*) are released onto the leaf. After 6 days, the number of the surviving insects is examined and the mortality of insects is calculated by the following equation.

$$\text{Mortality (\%)} = \{1 - \text{Number of surviving insects} / 20\} \times 100$$

Test Example 7-1

The test was conducted by making the prescribed concentration 200 ppm and using each of the below-mentioned Present compounds as a test compound according to the Test Method 7. As a result of the test, the below-mentioned Present compounds showed 90% or greater as the mortality. Present compounds: 1, 2, 5, and 6

Test Method 8

The test compound is made to a formulation according to a similar method to that described in the Formulation Example 5, and thereto is added water containing 0.03 v/v % of Shindain (registered trademark) to prepare a diluted solution containing a prescribed concentration of the test compound.

Adults of tobacco whiteflies (*Bemisia tabaci*) are released on tomato (*Lycopersicon esculentum*) seedling that is planted in a container to let them oviposit for about 24 hours. The seedling are maintained for 8 days to complete egg hatching and to have the nymphs of tobacco whiteflies occurring on the tomato leaves. The diluted solutions are sprayed to the seedling at a ratio of 10 mL/seedling. After 7 days, the number of the surviving insects is examined, and the controlling value is calculated by the following equation.

$$\text{Controlling value (\%)} = \{1 - (Cb \times Tai) / (Cai \times Tb)\} \times 100$$

wherein the symbols in the formula represent the following descriptions.

Cb: Number of the insects shortly before the treatment in untreated group;
Cai: Number of the surviving insects at the time of the investigation in untreated group;
Tb: Number of the insects shortly before the treatment in treated group;
Tai: Number of the surviving insects at the time of the investigation in treated group

Test Example 8-1

The test was conducted by making the prescribed concentration 200 ppm and using each of the below-mentioned Present compounds as a test compound according to the Test Method 8. As a result of the test, the below-mentioned Present compounds showed 90% or greater as the controlling value.

Present compounds: 1, 2, 5, and 6

Test Method 9

The test compound is made to a formulation according to a similar method to that described in the Formulation Example 1, and thereto is added water to prepare a diluted solution containing a prescribed concentration of the test

compound.

Into the diluted solution, 30 last instar larvae of common house mosquito (*Culex pipiens pallens*) are released, and after 1 day, the state of the common house mosquito larvae is examined, and the mortality of insects is calculated by the following equation.

$$\text{Mortality (\%)} = (\text{Number of dead insects} / \text{Number of tested insects}) \times 100$$

Test Example 9-1

The test was conducted by making the prescribed concentration 3.5 ppm and using each of the below-mentioned Present compounds as a test compound according to the Test Method 9. As a result of the test, the below-mentioned Present compounds showed 100% as the mortality.

Present compounds: 1, 2, 3, and 4

Test Method 10

The test compound is dissolved into acetone containing a surfactant, then the solution is poured into a 20 mL container, the solution is coated uniformly on the inner face of the container so that the test compound will be 10 $mg/m^2$ and the surfactant will be 40 $mg/m^2$, and the container is then dried.

Five(5) common house mosquito (*Culex pipiens pallens*) female adults are released into the container, and the container is then covered with lid. After the prescribed time, the state of the common house mosquito is examined, and the mortality is calculated by the following equation.

$$\text{Mortality (\%)} = (\text{Number of dead insects} / \text{Number of tested insects}) \times 100$$

Test Example 10-1

The result of test conducted according to the Test Method 10 is shown below. The test was conducted by making the prescribed time 1 day and using each of the below-mentioned Present compounds as a test compound. As a result of the test, the below-mentioned Present compounds showed 100% as the mortality.

Present compounds: 1, 2, 5, and 6

Test Method 11

The test compound is dissolved into acetone containing a surfactant, then the solution is poured into a 20 mL container, the solution is coated uniformly on the inner face of the container so that the test compound will be 20 $mg/m^2$ and the surfactant will be 40 $mg/m^2$, and the container is then dried.

Ten(10) cat flea (*Ctenocephalides felis*) adults are released into the container, and the container is then covered with lid. After the prescribed time, the state of the cat flea is examined, and the mortality is calculated by the following equation.

$$\text{Mortality (\%)} = (\text{Number of dead insects} / \text{Number of tested insects}) \times 100$$

Test Example 11-1

The result of test conducted according to the Test Method 11 is shown below. The test was conducted by making the prescribed time 2 days and using each of the below-mentioned Present compounds as a test compound.

As a result of the test, the below-mentioned Present compounds showed 100% as the mortality.

Present compounds: 1 and 2

Test Example 12

The Present compound 1 or 2 (60 mg) was dissolved into acetone (600 μL) containing 5% of Tween 20, and then thereto was added water to prepare a solution (60 mL).

The solution (20 mL) and soil (400 mL) contaminated with southern root-knot nematodes (*Meloidogyne incognita*) were mixed, and roots of healthy tomato (*Lycopersicon esculentum*) seedlings (third to fourth leaf stage) were transferred to the soil. Shortly after the transfer, the remaining solution (40 mL) was irrigated to the soil of the tomato seedlings.

After 28 days, the roots were pulled out of the soil, washed with water, and the degree of root damage (degree of root-knot) was investigated according to the Zeck's root-knot index (Zeck, W. M. (1971): Pflanzenschutz-Nachichten. Bayer AG, 24, 141-144.).

As a result, the group treated with the Present compound 1 or 2 showed "2" as the root-knot index. Meanwhile, the untreated group showed "5" as the root-knot index. Namely, the Present compound 1 and 2 reduced the root-knot formation.

Zeck's root-knot index

0: No root-knot is observed.
1: Several small root-knots can be recognized by careful observation.
2: Several small root-knots similar to 1 can be easily identified.
3: There are many small root-knots, and some of which are fused. The root function is almost intact.
4: There are many small root-knots and some large root-knots. Many of roots are functioning.
5: 25% of roots are markedly adhered by root-knots and not functioning.
6: 50% of roots are markedly adhered by root-knots and not functioning.
7: 75% of roots are markedly adhered by root-knots and the ability to regenerate the roots is lost.
8: There is no healthy root and plant nutrient absorption is inhibited. The foliage is still blue.
9: The root system completely covered by root-knots is rotting. The plants are dying.
10: Both plants and roots are dead.

INDUSTRIAL APPLICABILITY

The Present compounds have excellent control effects on harmful arthropods or harmful nematodes.

## Claims

1. A method for controlling a harmful arthropod or a harmful nematode which comprises applying an effective amount of a compound represented by formula (I)

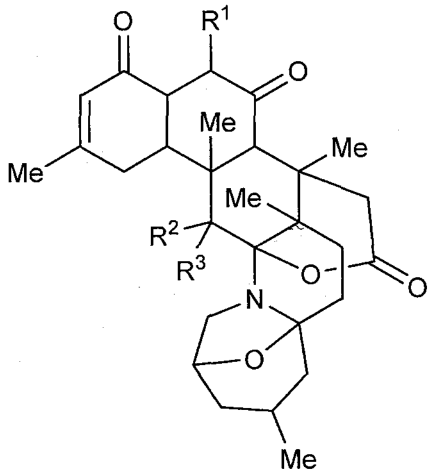

( I )

[wherein:

$R^1$ represents a hydrogen atom or a methyl group; and
$R^2$ and $R^3$ each represent a hydrogen atom, or $R^2$ and $R^3$ are combined with each other to represent an oxo group] or an N-oxide thereof or a salt thereof to a harmful arthropod or a harmful nematode or a habitat where a harmful arthropod or a harmful nematode lives.

**2.** The method according to claim 1, wherein $R^2$ and $R^3$ each represent a hydrogen atom in the formula (I).

**3.** A composition for controlling a harmful arthropod or a harmful nematode comprising a compound represented by formula (I)

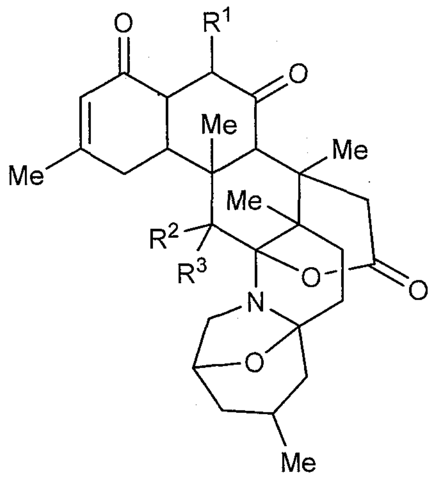

( I )

[wherein:

$R^1$ represents a hydrogen atom or a methyl group; and
$R^2$ and $R^3$ each represent a hydrogen atom, or $R^2$ and $R^3$ are combined with each other to represent an oxo group] or an N-oxide thereof or a salt thereof.

**4.** The composition according to claim 3 further comprising one or more ingredient(s) selected from the group consisting of Group (a), Group (b), Group (c), Group (d), and Group (e):

Group (a): a group consisting of insecticidal active ingredients, miticidal active ingredients, and nematicidal active ingredients;
Group (b): fungicidal active ingredients;

Group (c): plant growth regulatory ingredients;
Group (d): repellent ingredients;
Group (e): biological control materials.

**5.** A method for controlling a harmful arthropod or a harmful nematode which comprises applying an effective amount of the composition according to claim 4 to a harmful arthropod or a harmful nematode or a habitat where a harmful arthropod or a harmful nematode lives.

**6.** A seed or a vegetative reproductive organ holding an effective amount of a compound represented by formula (I)

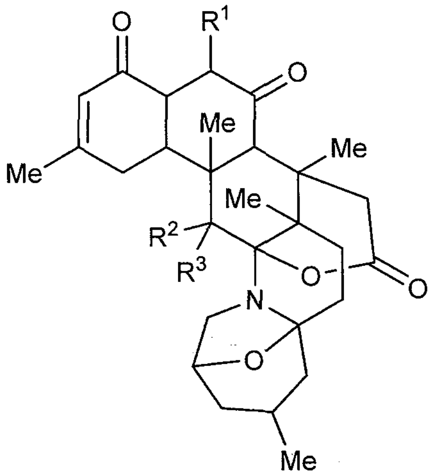

(I)

[wherein:

$R^1$ represents a hydrogen atom or a methyl group; and
$R^2$ and $R^3$ each represent a hydrogen atom, or $R^2$ and $R^3$ are combined with each other to represent an oxo group] or an N-oxide thereof or a salt thereof or an effective amount of the composition according to claim 4.

**7.** A composition for controlling a harmful arthropod or a harmful nematode comprising a compound represented by formula (I)

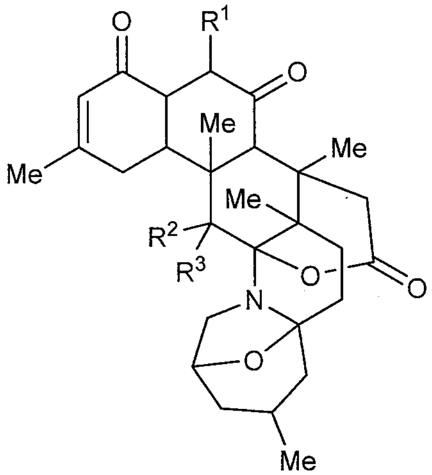

(I)

[wherein:

$R^1$ represents a hydrogen atom or a methyl group; and
$R^2$ and $R^3$ each represent a hydrogen atom, or $R^2$ and $R^3$ are combined with each other to represent an oxo group] or an N-oxide thereof or a salt thereof, and an inert carrier.

**INTERNATIONAL SEARCH REPORT**

International application No. **PCT/JP2022/008337**

**A. CLASSIFICATION OF SUBJECT MATTER**

***A01N 43/90***(2006.01)i; ***A01P 5/00***(2006.01)i; ***A01P 7/00***(2006.01)i
FI: A01N43/90 102; A01P5/00; A01P7/00

According to International Patent Classification (IPC) or to both national classification and IPC

**B. FIELDS SEARCHED**

Minimum documentation searched (classification system followed by classification symbols)

A01N43/90; A01P5/00; A01P7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2005-520840 A (COUNCIL OF SCIENTIFIC AND INDUSTRIAL RESEARCH) 14 July 2005 (2005-07-14)<br>claims, examples | 1-7 |
| A | JP 10-53589 A (SAGAMI CHEM RES CENTER) 24 February 1998 (1998-02-24)<br>claims, examples | 1-7 |
| A | BEHENNA, Douglas C. et al. The biology and chemistry of the zoanthamine alkaloids. Angewandte Chemie, International Edition. 2008, vol. 47, no. 13, pp. 2365-2386, ISSN 1433-7851<br>entire text, all drawings | 1-7 |
| A | VENKATESWARLU, Y. et al. Chemical reduction of zoanthamine and evaluation of antibacterial activity. Heterocyclic Communications. 1998, vol. 4, no. 6, pp. 575-580, ISSN 0793-0283<br>entire text, all drawings | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 March 2022** | **05 April 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/008337**

| Patent document cited in search report | Publication date (day/month/year) | Patent family member(s) | Publication date (day/month/year) |
|---|---|---|---|
| JP 2005-520840 A | 14 July 2005 | WO 2003/079793 A1<br>claims, examples<br>EP 1492407 A1<br>CA 2480866 A<br>KR 10-2004-0094886 A<br>AU 2002247922 A | |
| JP 10-53589 A | 24 February 1998 | WO 1997/035581 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021031870 A
- JP H1053589 A


### Non-patent literature cited in the description


- The Pesticide Manual. BCPC
- *Heterocyclic Communications,* 1995, vol. 1 (2-3), 207-214
- *Bulletin of the Chemical Society of Japan,* 1998, vol. 71, 771-779
- *Pure and Applied Chemistry,* 2007, vol. 79, 651-665
- *Bulletin of the Chemical Society of Japan,* 1998, vol. 71, 771
- *Chemistry - An Asian Journal,* 2011, vol. 6, 922-931
- **ZECK, W. M.** *Pflanzenschutz-Nachichten.,* 1971, vol. 24, 141-144